# EUROPEAN PATENT SPECIFICATION

(11) **EP 0 869 881 B1**
(45) Date of publication and mention of the grant of the patent: **18.12.2002**
(21) Application number: 96936574.1
(22) Date of filing: 14.10.1996
(51) Int. Cl.: B60R 16/02

(54) **SYSTEMS AND METHODS FOR MONITORING AND CONTROLLING TRACTOR/TRAILER VEHICLE SYSTEMS**
SYSTEM UND VERFAHREN ZUR ÜBERWACHUNG UND STEUERUNG VON ZUGMASCHINE/ANHÄNGER-FAHRZEUGSYSTEMEN
DISPOSITIFS ET PROCEDES SERVANT A CONTROLER ET A COMMANDER DES SYSTEMES DE VEHICULE COMBINANT UN TRACTEUR ET UNE REMORQUE

(30) Priority: 09.11.1995 US 554907
(43) Date of publication of application: 14.10.1998
(73) Proprietor: Power Talk, Inc, Rock Hill, SC 29731-0880 (US)
(72) Inventor: LESESKY, Alan, C., Charlotte, NC 28226 (US); WEANT, Bobby, Ray, Rock Hill, SC 29732 (US)
(74) Representative: Warren, Anthony Robert
(86) International application number: PCT/US96/16580
(87) International publication number: WO 97/017232

(56) References cited:
- EP-A- 0 546 370
- US-A- 4 809 177
- L' ONDE ELECTRIQUE, vol. 73, no. 3, May 1993 - June 1993, PARIS ,FR, pages 42-46, XP000362386 SAYEGRIH ET AL.: "DATA TRANSMISSION IN VEHICLES . THE SPREAD SPECTRUM TECHNIQUE"

## Description

This invention relates generally to data communications in a combination of a tractor and a trailer, more specifically, to data communications systems and methods for monitoring and controlling systems of a tractor/trailer.

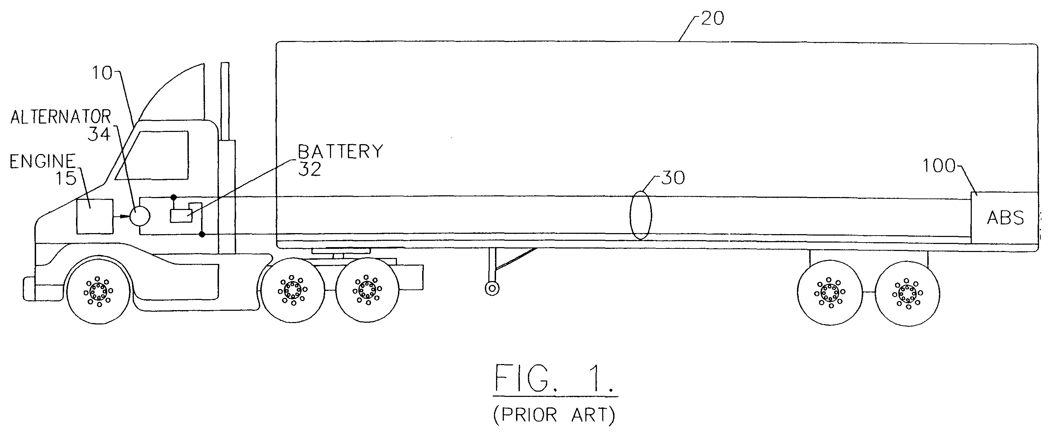

The trucking industry has for many years used tractor/trailer combinations to transport cargo over the roadways to intended destinations. As shown in Fig. 1, tractor **10** and trailer **20** are mechanically coupled together so that the tractor can pull the trailer with its cargo in an efficient and cost effective manner. Various links between the tractor and the trailer provide vehicle subsystems with power and/or control signals to operate. Hydraulic, pneumatic, electrical and other subsystems on the tractor/trailer combination have associated electrical conductors and pneumatic lines running therebetween so these subsystems can operate. With respect to electrical subsystems, a tractor/trailer combination typically includes a tractor **10** and trailer **20** and a power bus **30** electrically connected to one or more batteries **32**, which are typically charged by an alternator **34** mechanically driven by a tractor engine **15**. Thus, electrical power is distributed from tractor **10** to subsystems in trailer **20.**

The trucking industry has historically lagged behind other industries with respect to technological innovation, but recently has been incorporating more and more sophisticated electronic subsystems in both tractors and trailers. For example, regulatory changes arising from safety concerns have led to the incorporation of trailer antilock braking systems (ABS), frequently microprocessor-controlled, in trailers in order to minimize the risk of trailer skids and jackknifing. New trailers are being constructed with ABS, while older trailers are being retrofitted to incorporate ABS. These systems may include, for example, actuators and transducers operatively connected to the trailer wheels and braking hardware, controlled by electronic circuits located elsewhere on the trailer and tractor. As shown in Fig. 1, an antilock braking system **100**, as well as other subsystems, conventionally receives electrical power from power bus **30**.

Antilock braking systems may produce data signals which indicate various conditions of the ABS. These data signals may include, for example, a failure warning signal which is asserted if an ABS microprocessor detects a failure within itself or other components of the ABS. In some applications, a data signal may drive a light-emitting diode (LED) or other indicator. Conventionally, the tractor/trailer operator has no external indication of the state of the ABS. Even those systems having an external indicator may not allow a tractor/trailer operator to inspect the state of the ABS while positioned in the tractor cab with the tractor/trailer combination in operation. The operator typically may have to park the vehicle, exit the cab, and inspect an ABS indicator on the trailer, if present, in order to monitor the state of the ABS. Thus, it may be difficult for the operator to monitor the state of the ABS system while the vehicle is moving.

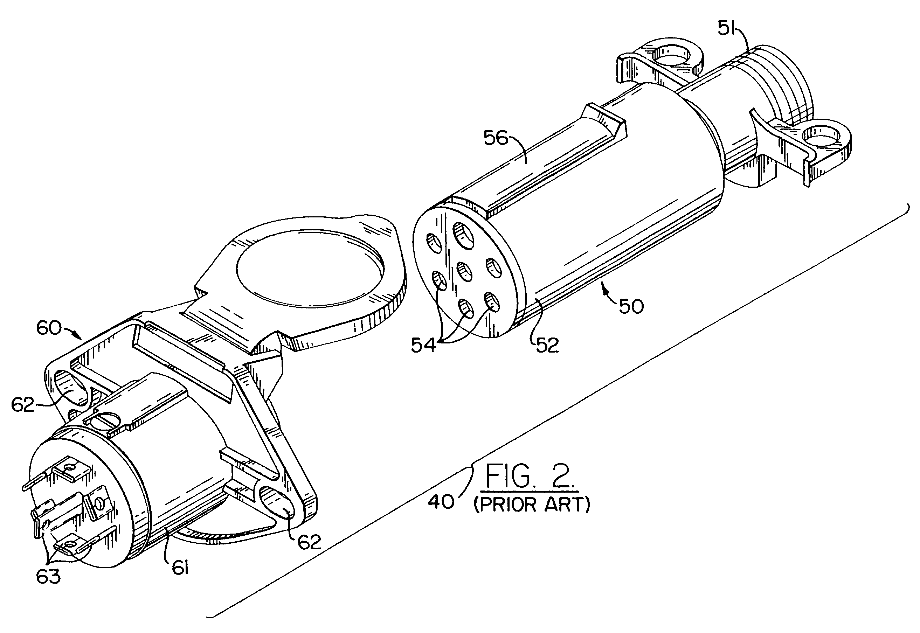

It may be possible to wire data signals from an ABS to a tractor using a dedicated signal path such as a twisted wire pair passed from the trailer to the tractor. A seven-pin connector has been widely used by the trucking industry to convey electrical power for lighting and equipment operation between a tractor and a trailer. As shown in Fig. 2, the connector **40** includes two disengageable connector portions **50** and **60** to permit the tractor and trailer combination to be disconnected. An example of such a seven-pin connector is illustrated in U.S. Patent No. 4,969,839 to Nilsson, the entire disclosure of which is specifically incorporated herein by reference. These seven-pin connectors are well known and have been specified by the Society of Automotive Engineering (SAE) according to the standard number "SAE J560" the teachings of which are also incorporated herein by reference.

Each of the sockets **54** in the standard seven-pin connector (SAE J560) is an electrical conductor carried by the plug portion **50** of the connector and which is adapted to mate with a corresponding electrical pin **63**, also an electrical conductor, in the receptacle portion **60** of the connector to thereby provide an electrical signal between the tractor and the trailer. The pins and corresponding sockets generally are assigned to specific electrical subsystems, for example, power, ground, turn signals, brake lights, clearance lamps, emergency flashers, and other devices requiring electrical signals. The seventh pin on the connector is usually an "auxiliary" pin which can be used for specific electrical purposes or applications on individual tractor/trailer combinations.

Although pins and sockets of the seven-pin connector may be used to convey an ABS status signal to a tractor, the generally limited circuit capacity afforded by the standardized connector would be reduced even further. The standard seven-pin connector simply may not provide the circuit capacity needed to convey to a tractor an increased number of data signals from various systems located on trailers, including additional ABS systems which may be present when a tractor is connected to multiple trailers. Connectors with greater capacity could be employed, but the seven-pin connector (SAE J560) is an industry standard for tractor/trailers. Alternative communications techniques such as fiber optic links or radio communication through free space may bypass the bottleneck of limited channel capacity in the standard connectors used to connect tractors and trailers, but may require the installation of complex and expensive electronic components. These components, often referred to as "black boxes," may be vulnerable to theft and vandalism when placed on trailers which often are under the control of multiple operators and left in unsecured areas.

European patent application 0 546 370 (the'370 European application) describes an electrical communications system for a tractor/trailer combination. According to the '370 European application, the communications system has an electronic control unit located in the tractor and another electronic control unit located in the trailer that are adapted to communicate via a standard 7-pin connector that eventually interconnects the tractor and the trailer. Each electronic control unit controls the state of a number of switching devices so as to establish appropriate electrical connections via the 7-pin connector.

US-A-5,142,278 to Moallemi et al. describes an electrical communication system for a tractor/trailer combination. According to the Maollemi '278 patent, the electrical communication system transmits data on existing wiring of the trailer using Frequency Shift Keyed Modulation.

"System 86 Products Train Applications," a specification manual from Morrison Knudsen Corporation, 1994, Morrison Knudsen's Advance Systems Division, pages 2-3, 13 and 40, also describes an electrical communication system for use on a train. The electrical communication system transmits data over existing wiring using spread spectrum modulation.

"Telecommunications Engineer's Reference Book," edited by Fraidoon Mazda, Buttersworth-Heineman, first published 1993, describes an electrical communication system that uses frequency shift keyed modulation as a precursor to spread spectrum modulation to remedy indicated problems in spread spectrum techniques.

The present invention is directed to communication systems, modules and methods for data communications in tractors and/or trailers, generally of the type disclosed in US-A-5,142,278 and as defined in the precharacterising clauses of claims 1, 11, 20, 22, 29 and 31.

It is an object of the present invention to provide improved systems, modules and methods for data communication in a tractor and/or a trailer.

Various aspects of the communication systems, modules and methods according to the present invention are defined in the characterising clauses of claims 1, 11, 20, 22, 29, and 31.

The data communications systems, modules and methods embodying the invention utilize existing wiring on tractors and trailers, and are also compatible with standardized connectors widely used in the trucking industry.

The data communications systems embodying the invention are less sensitive to the interference and noise frequently present in tractor and trailer electrical systems.

The systems and methods embodying the invention may be used for monitoring a warning system of a tractor/trailer combination, such as an antilock braking system of a tractor/trailer combination, by a tractor/trailer operator positioned in a cab of a tractor.

The systems and methods embodying the invention may be used for monitoring an antilock braking system which allow a trailer equipped with elements of an antilock braking system monitoring system to be used with a tractor which is not equipped with complementary elements while still providing an indication of a status of the antilock braking system to a tractor/trailer operator positioned within the tractor cab.

The systems for monitoring an antilock braking system in a tractor/trailer combination may use components packaged to be inconspicuous and less vulnerable to theft and vandalism.

The systems and methods may communicate antilock braking signals to a status indicator via the power bus which distributes power to the antilock braking system. Thus, a tractor connected to a trailer may have an antilock braking system and an antilock braking system interface which produces a data signal which is input into an **ABS** reporting system that includes power line carrier communicating means for communicating a data communications signal representing a status of the antilock braking system over a power bus that distributes power to the antilock braking system, and status determining means for determining a status of the antilock braking system from the data communications signal. The status determining means preferably includes an indicator which indicates the determined status to a tractor/trailer operator positioned within the cab of the tractor.

The systems and methods embodying the present invention provide for remote monitoring an antilock braking system by a tractor/trailer operator, thus allowing a tractor/trailer operator to monitor an antilock braking system while the operator is positioned in the tractor cab and the tractor/trailer combination is in motion. The status of an antilock braking system can be monitored without requiring extensive rewiring of the tractor or the trailer. Furthermore, an antilock braking system can be monitored using existing power wiring and connectors.

Reference will now be made to the accompanying drawings, in which:
Fig. **1** is a schematic diagram illustrating a combination tractor/trailer as in the prior art;
Fig. **2** is an isometric exploded view illustrating a prior art **SAE J560** connector;
Fig. **3** is a schematic diagram illustrating an antilock braking system monitoring system according to an embodiment of the warning system of the present invention;
Fig. **4** is a block diagram illustrating power line carrier communicating means according to the present invention;
Fig. **5** is a block diagram illustrating status determining means according to the present invention;
Fig. 6 is an electrical schematic diagram illustrating an electrical circuit for communicating a data communications signal over a power bus according to the present invention;
Fig. 7 is an electrical schematic diagram illustrating an electrical circuit for determining a status of an antilock braking signal from a data communications signal received from a power bus according to an embodiment of a warning system of the present invention;
Figs. 8A-B are software block diagrams illustrating operations used in determining a status of an antilock braking system from transitions of a data communications signal according to the present invention;
Fig. 9A is a schematic diagram illustrating a tractor/trailer combination with an antilock braking system monitoring system according to an embodiment of a warning system of the present invention;
Fig. 9B is a perspective drawing illustrating an instrument cluster of a tractor including an indicator according to the present invention;
Fig. 10 is a schematic diagram illustrating a tractor/trailer combination with a warning indicator according to the present invention;
Fig. 11 is a schematic diagram illustrating an intelligent warning indicator according to the present invention;
Fig. 12 is a schematic diagram illustrating a tractor connected to multiple trailers including an antilock braking system monitoring system according to an embodiment of a warning system of the present invention;
Fig. 13 is a block diagram illustrating an embodiment of a communications system according to the present invention;
Fig. 14 is a block diagram illustrating an embodiment of a communication system according to the present invention;
Fig. 15 is a block diagram illustrating an embodiment of a communications system according to the present invention;
Fig. 16 illustrates embodiments of communications modules according to the present invention;
Fig. 17 is a block diagram illustrating an embodiment of a trailer communications module according to the present invention;
Fig. 18 is a block diagram illustrating an embodiment of a tractor communications module according to the present invention; and
Fig. 19 illustrates an embodiment of a tractor communications module according to the present invention.

The present invention now will be described more fully hereinafter with reference to the accompanying drawings, in which preferred embodiments of the invention are shown and in which like numbers refer to like elements throughout.

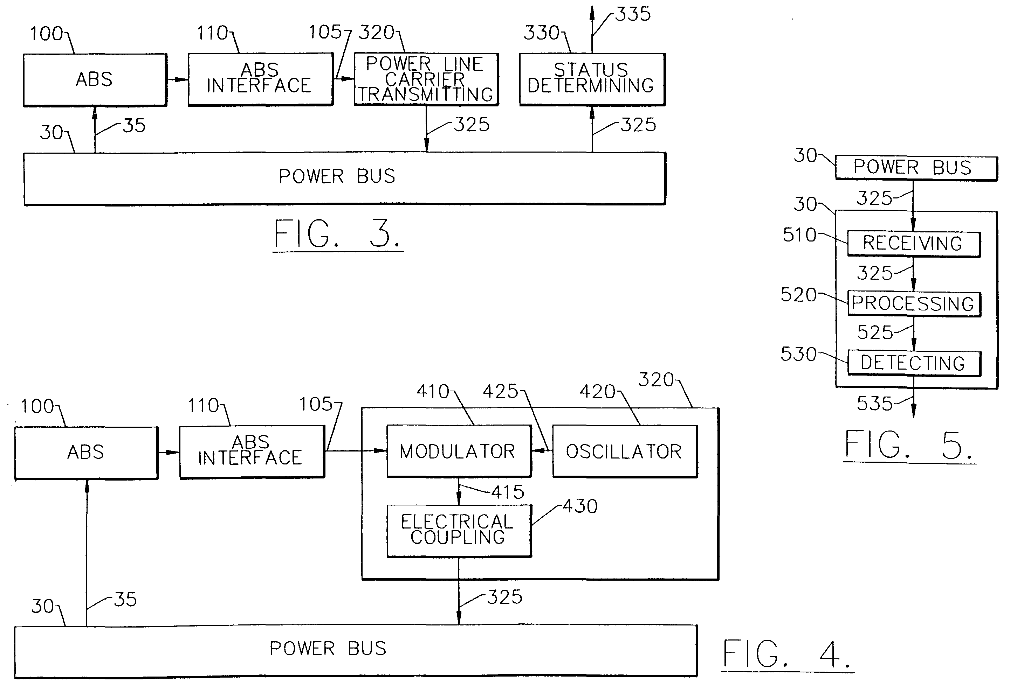

Fig. 3 illustrates an antilock braking system monitoring system according to the present invention. The antilock braking system **100** receives electrical power **35** from the power bus **30**. An antilock braking system interface **110**, responsive to the antilock braking system **100**, produces a data signal **105** representing a status of antilock braking system **100**. Data signal **105** may be a binary signal representing an either/or condition of the antilock braking system **100** such as failed/operational, active/standby, and the like. As many antilock braking systems employ microprocessor-based controllers, the antilock braking system interface may be located within the antilock braking system **100** and the data signal **105** may be a digital signal produced by the antilock braking system controller. It will be understood by those skilled in the art that various forms of antilock braking system interface **110** may be used with the present invention, such as relays or switches electrically connected to control signals of antilock braking system **100**, transducers mechanically or electrically connected to components of antilock braking system **100,** and the like. The data signal **105** may be digital as described above, or may be an AC or DC analog signal, the amplitude, frequency and other parameters of which may provide information.

The power line carrier communicating means **320** is responsive to antilock braking system interface **110** and produces the data communications signal **325** superposed on power bus **30.** As illustrated in Fig. 4, the power line carrier communicating means **320** preferably includes a modulator **410** which modulates a carrier signal **425**, produced by a waveform generator **420** which may be an oscillator, with data signal **105**. Electrical coupling means **430** couples the modulator **410** to the power bus **30**, superposing the data communications signal **325**, in the form of a data-modulated carrier signal, on the power bus **30**.

Power line carrier techniques for superposing a modulated carrier signal on a power bus and receiving the superposed signal from the power bus are known for other applications. It will be understood by those skilled in the art that the modulator **410** may perform amplitude modulation, frequency modulation, phase modulation and other modulation functions. It will also be understood that the electrical coupling means **430** may utilize inductive coupling, capacitive coupling, a combination of inductive and capacitive coupling, and other methods to superpose the data communications signal **325** on the power bus **30**. It will be understood by those skilled in the art that superposing refers to any linear or nonlinear combination of signals in transmission media such as wires, busbars, and the like.

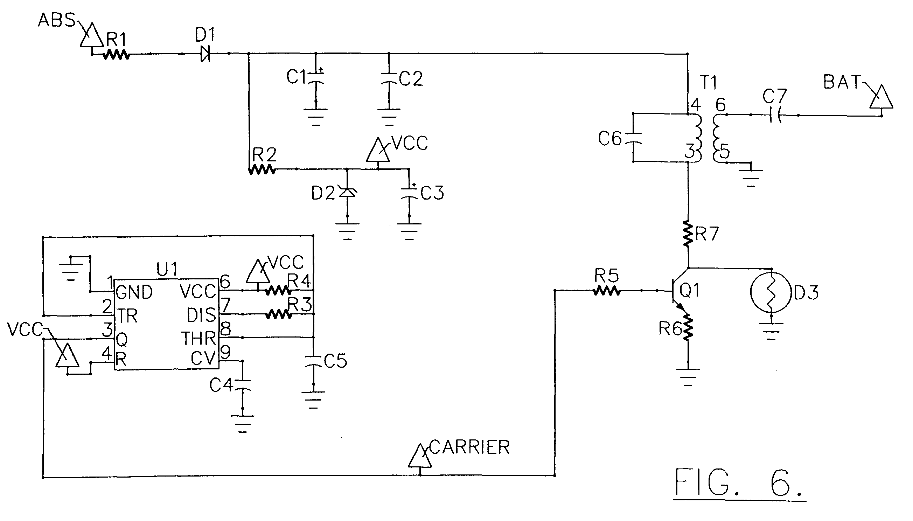

Fig. 6 is an electrical schematic diagram of an exemplary embodiment according to the present invention, illustrating an electrical circuit which performs functions of the power line carrier communicating means **320.** For example, an LM555 timer IC **U1** preferably produces a carrier signal having a predetermined frequency such as approximately 125 kHz at a carrier signal output node **CARRIER** when the voltage at an input node **ABS,** where the data signal **105** is input, is above a predetermined level, preferably approximately 12 volts. The signal at the carrier signal output node **CARRIER** drives the base of transistor **Q1.** This induces a sinusoidal current between terminals **5,6** of a transformer **T1** which is capacitively coupled through a capacitor **C7** to a power bus **30** present at a power bus output node **BAT.** Thus, modulation of the carrier signal at the carrier signal output node **CARRIER** by the data signal **105** at the input node **ABS** is effected, producing the data communications signal **325** superposed on the power bus **30.**

It will be understood by those skilled in the art that the power line carrier communicating means 320 may be implemented using various circuits and techniques. For example, the power line carrier communicating means **320** may perform signal processing on the data signal **105** or combine the data signal **105** with other signals in an encoded data stream which is used to modulate a carrier signal and superposed on the power bus **30**. The waveform generator **420** may be integrated into the antilock braking system **100** or another electronic system present on the tractor or trailer. The ABS system **100** may also be a pressure monitoring system, a temperature monitoring system, or other subsystem so that the status of the system is indicated or warned to others such as an operator positioned in the cab of a tractor. In the embodiment illustrated in Fig. 6 the data signal **105** present at the input node **ABS** corresponds to a voltage supplied by the antilock braking system interface **110,** but it will be understood that the data signal **105** may be coupled into modulator **420** in various other ways, such as optical and magnetic coupling.

It will be understood by those skilled in the art that power line carrier communicating means **320** may be centralized or distributed. It will also be understood that power line carrier communicating means **320** may include other means for processing data signal **105**, such as signal processing or coding functions implemented using special purpose hardware or a combination of special purpose hardware and general purpose hardware running software. Preferably, the power line carrier communicating means **320**, however, includes means for communicating data, which may include a modulator, over a predetermined spectrum of frequencies such as illustrated by the spread spectrum technology embodied in the integrated circuits and components (i.e., Intellon SSC PLCEFN, XCR38149PRO2, QHCK-9409 integrated circuit or CEBus-compliant communications modules according to EIA RS-232 and ISA bus module standards) of the Intellon Spread Spectrum Carrier of the Intellon Corporation of Ocala, Florida which are hereby incorporated herein in its entirety by reference. As understood by those skilled in the art, a spectrum (e.g., 100-400 KHz) of frequencies for data communications allows the signal to be communicated in a manner over the power line which significantly reduces the interference or suppression of the received signal by other electromechanical systems in the tractor such as the alternator.

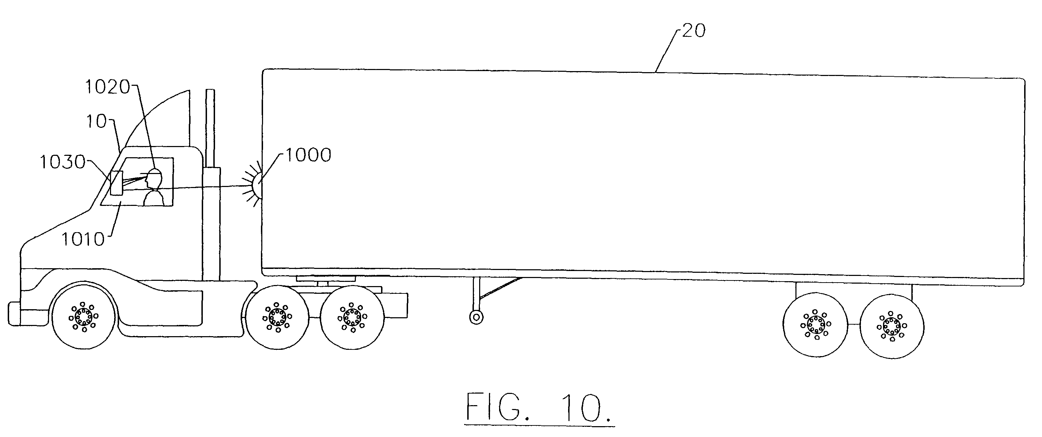

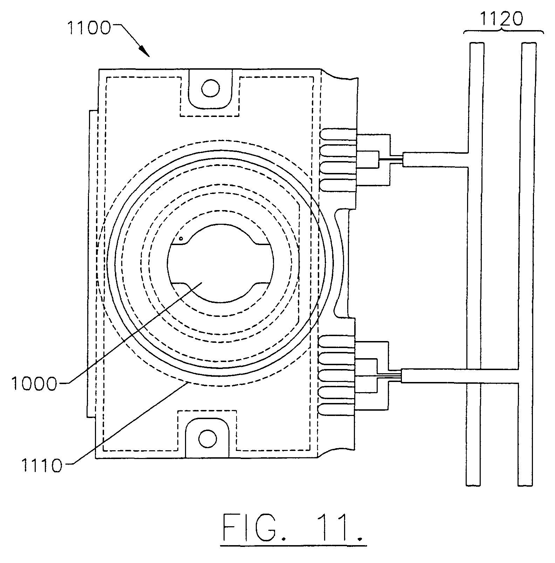

An antilock braking system monitoring system according to the present invention may also include a warning indicator **1000** as shown in Figs. 10 and 11. The warning indicator **1000** preferably is packaged with power line carrier transmitter means **320** in a trailer warning indicator package **1100**, producing an "intelligent warning indicator" as illustrated in Fig. 11. The trailer warning indicator package **1100** is positioned on trailer **20** so that the warning indicator **1000** is visible to a tractor/trailer operator **1020** positioned within a tractor cab **1010**, as shown in Fig. 10, thus providing a way to indicate a status of the antilock braking system **100** to a tractor/trailer operator even if the tractor **10** is not equipped with status determining means **330**. Preferably, the warning indicator **1000** is powered by the data signal **105**, but it will be understood by those skilled in the art that the warning indicator **1000** may be directly actuated by the data signal **105** or indirectly actuated by such devices as relays, lamp drivers and the like. The trailer warning indicator package **1100** also preferably has an inconspicuous standard form factor, such as that used for the running lights commonly used on trailers, to thereby reduce the risk of vandalism or theft.

Referring again to Fig. 3, status determining means **330** determines a status **335** of antilock braking system **100** from the data communications signal **325** superposed on the power bus **30** by the power line carrier communicating means **320**. As shown in Fig. 5, the status determining means **330** preferably includes power line carrier receiving means **510** for receiving the data communications signal **325** from the power bus **30**, processing means **520** for producing a data-modulated digital carrier signal **525** from the received data communications signal **325**, and detecting means **530** for detecting a status **535** of the antilock braking system **100** from transitions of data-modulated digital carrier signal **525**. It will be understood by those skilled in the art that the status determining means **330**, processing means **520** and detecting means **530** may be centralized or distributed. The status determining means **330**, processing means **520** and detecting means **530** may also be implemented using special purpose hardware or a combination of special purpose hardware and general purpose hardware running software.

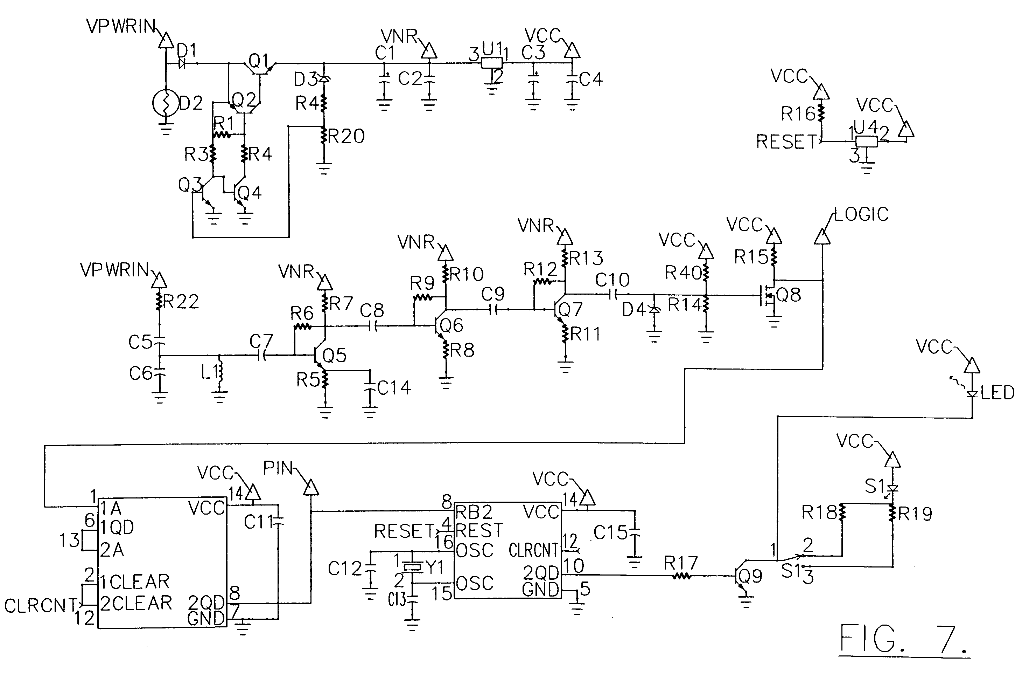

Fig. 7 is an electrical schematic diagram of an exemplary embodiment according to the present invention, illustrating an electrical circuit which performs functions of status determining means **330**. Data communications signal **325,** here an amplitude-modulated signal produced by a power line carrier communicating circuit of the type shown in Fig. 5, is received by a resonant tank circuit including capacitors **C5** and **C6** and inductor **L1** from power bus **30** present at a power bus input node **VPWRIN**. The received signal is capacitively coupled through capacitor **C7** into multistage level-changing and shaping circuits including transistors **Q5-Q8**. As will be understood by those skilled in the art, these circuits produce a first data-modulated digital carrier signal at a first digital carrier signal output node **LOGIC** with the same carrier frequency as the received data communications signal **325**.

In the illustrated embodiment, the first data-modulated digital carrier signal at the first digital carrier signal output node **LOGIC** is then divided in counter IC **U2** to produce a second data-modulated digital carrier signal at a second digital carrier signal output node **PIN** which has a carrier frequency 1/128th of the first data-modulated digital carrier signal at the second node **LOGIC**. The second data-modulated digital carrier signal is then input into a programmable controller IC **U3** having operating software which counts transitions of the second data-modulated digital carrier signal, illuminating an external light-emitting diode (LED) **LED** if the number of transitions occurring in the second data-modulated digital carrier signal occurring during a predetermined time interval is above a predetermined threshold, indicating a state of data signal **325**.

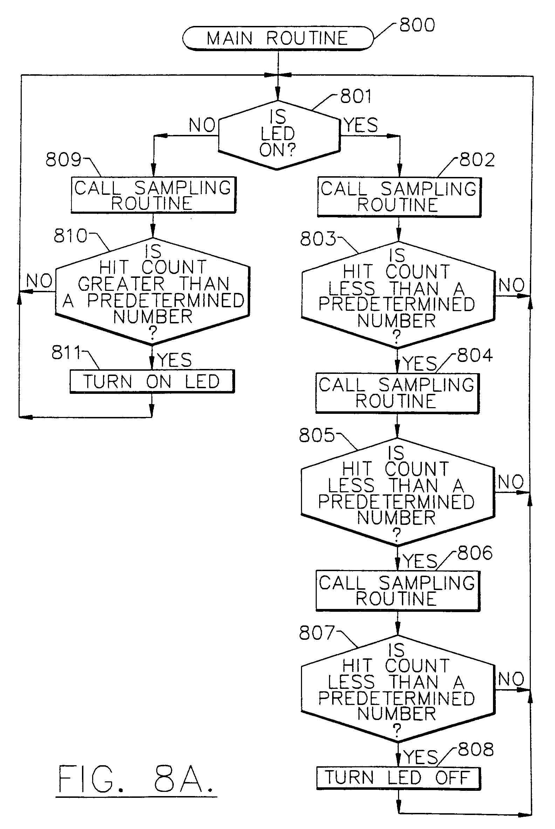

Figures 8A-B illustrate exemplary operations for the programmable controller chip **U3** of Fig. 7. A pair of software counters control a main routine **800** and a sampling routine **850**. One of the software counters is a first software hit count which counts the number of times a transition is detected in the second data-modulated signal at the second digital carrier signal output node **PIN**, while the other software counter is a loop count which keeps track of the number of times the second data-modulated signal is sampled during the sampling routine **850**.

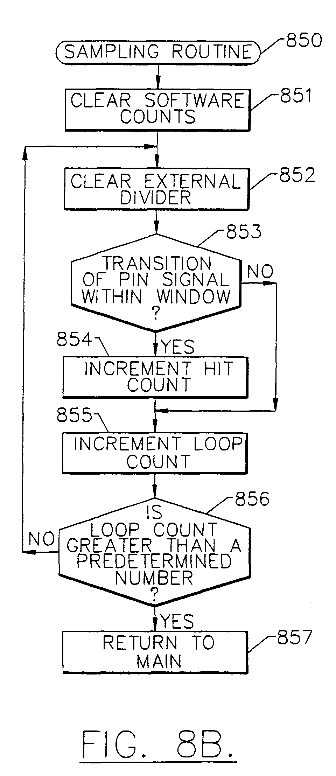

The main routine **800** determines if the external light-emitting diode **LED** is already in an "on" state **801**. If it is, the sampling routine **850** is called, shown in Fig. 8B. The two software counts are initialized **851** and the external counter IC **U2** is cleared **852**. The sampling routine waits to see if a transition occurs in the second data-modulated digital carrier signal at the second digital carrier signal output node **PIN** during a predetermined time interval, preferably within 823 to 1280 milliseconds from the time the external counter IC **U2** is cleared. If a transition occurs during the predetermined time interval, a software hit count is incremented **854**. If not, the software loop count is incremented **855**. If the loop count is less than a predetermined number **856**, preferably 500, the routine returns to clear the external counter IC **852**. If not, the sampling routine is exited **857**.

Returning to Fig. 8A, if the program returns to the main routine **800** from the sampling routine **850** and the software hit count is less than a predetermined number, preferably 50, the main program recalls the sampling program **804**. The sampling routine is called three times. After the final iteration **807**, if the returned software hit count is less than a predetermined number, preferably 50, the diode **LED** is turned off before returning to the main program **800**. If the diode **LED** is off entering the main **800**, the main routine calls the sampling program once **809**. If the returned software hit count is greater than a predetermined number, preferably **400**, then the diode **LED** is turned off.

Techniques for demodulating a modulated carrier signal are known in other applications. It will be understood by those skilled in the art that the exemplary operations of Figs. 8A and 8B provide sufficient hysteresis in the detection of the transitions of a modulated digital carrier signal to provide noise-resistant demodulation of the data-modulated signal **325**. It will also be understood that other means of demodulating data-modulated digital carrier signal **325** may be used with the present invention.

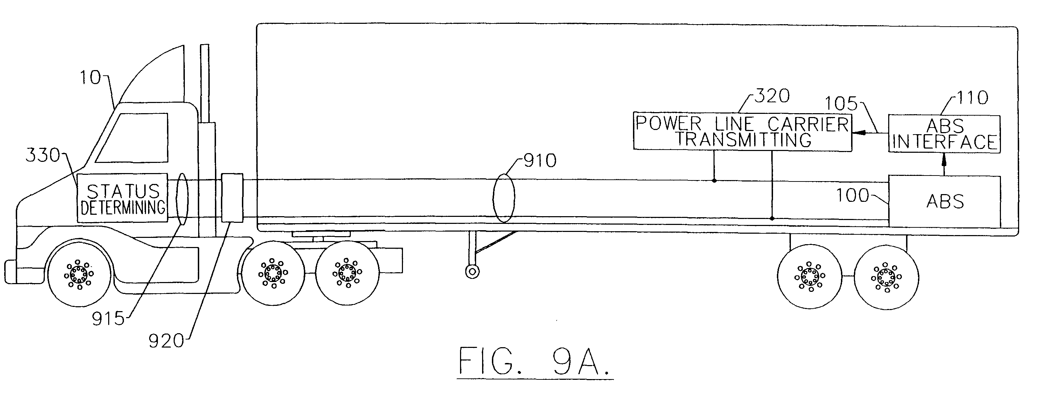

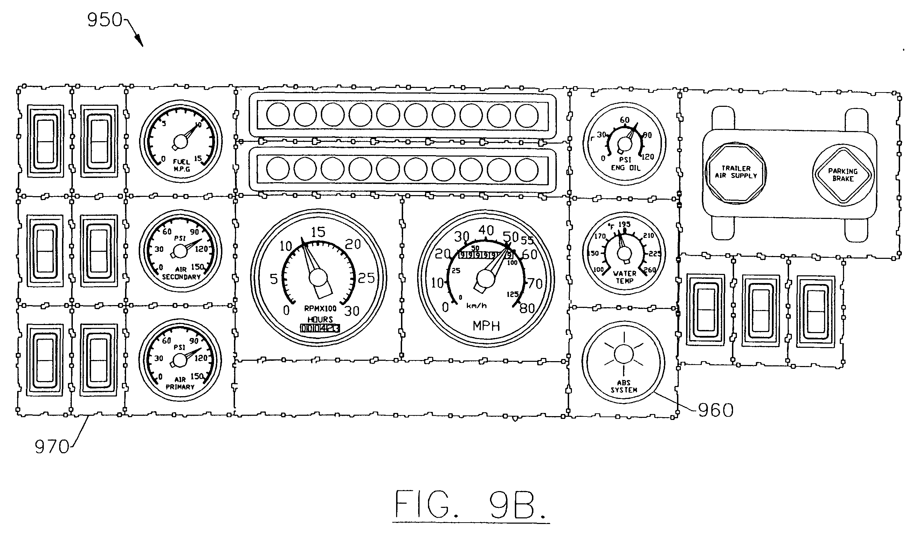

Fig. 9A illustrates an aspect of the present invention, showing status determining means 330 located in tractor **10**. Power bus **30** is shown including a plurality of trailer power lines **910** connected to a plurality of tractor power lines **915** by a connector **920**. Connector **920** preferably is an industry standard seven-pin SAE J560 as illustrated in Fig. 2. As shown in Fig. 9B, status determining means may include an indicator **950**, here shown as a visual indicator **960** mounted on a tractor instrument cluster **970**. It will be understood by those skilled in the art that indicator **950** may include other devices to indicate status of an antilock braking system to an operator of a tractor/trailer combination, including visual displays such as CRT's and lights, and audible annunciators. It will be also understood by those skilled in the art, status determining means **330** may be positioned elsewhere, including on the trailer.

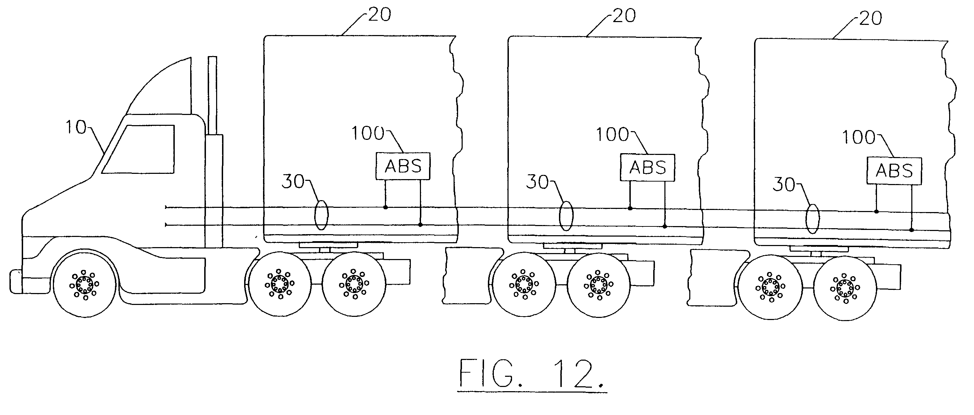

Fig. 12 illustrates another aspect of the present invention, showing a tractor **10** connected to multiple trailers **20**. Trailers **20** may each include an antilock braking system **100** and an antilock braking system interface **110** producing a data signal **105**. Each data signal **105** may be used to produce a data communications signal **325** which is superposed on the power bus **30.** Status determining means **330** determines statuses of antilock braking systems **100** from the data communications signals **325.** It will be understood by those skilled in the art that although data communications signals **325** may each have a unique predetermined carrier frequency allowing them to be separately received, power line carrier communicating means **320** and status determining means **330** may utilize, for example, time-multiplexing, code-multiplexing or other signal processing techniques to allow data communications signals **325** to have the same carrier frequency.

Figs. 3-5 illustrate operations for monitoring an antilock braking system of a tractor/trailer operation according to the present invention. A data communications signal **325** is produced in power line carrier communicating means **320** from a data signal **105** representing a status of an antilock braking system **100** produced by an antilock braking system interface **110**. The data communications signal **325** is superposed on a power bus **30** by power line carrier communicating means **320**. A status **335** of the antilock braking system **100** is determined from the data communications signal **325**.

The data communications signal **325** may be produced by modulating a carrier signal **425** having a predetermined carrier frequency by the data signal **105**. The data communications signal may be superposed on power bus **30** by electrical coupling means **430**, as illustrated by Fig. 4. The data communications signal **325** may be received by power line carrier receiving means **510**, as shown in Fig. 5. The received data modulated carrier signal may be processed by processing means **520** to produce a data-modulated digital carrier signal **525**. A status **535** of the antilock braking system **100** is detected from a count of transitions of the data-modulated digital signal **525** occurring during a predetermined time interval.

It has been found, according to the present invention, that spread spectrum technology, not generally used in tractor/trailer power line communications, is particularly suitable for the electrical environment of tractor/trailer systems. The energy of a spread spectrum data communications signal is spread across a broad range of frequencies such that even if one component is subject to coherent interference, the signal can still be reliably recovered. As the signal energy is widely distributed across a relatively wide spectrum, spread spectrum data communications systems tend to interfere less with coherent receivers such as radios. In contrast, the conventional modulation techniques utilized in some power line carrier systems is generally susceptible to interference from coherent electrical signals, such as those generated on the power bus of the tractor/trailer by switching transients from an alternator. In addition, because of the coherent nature of conventionally modulated signals, conventionally modulated signals may interfere with systems such as citizens' band (CB) radios, stereo systems, and navigation systems.

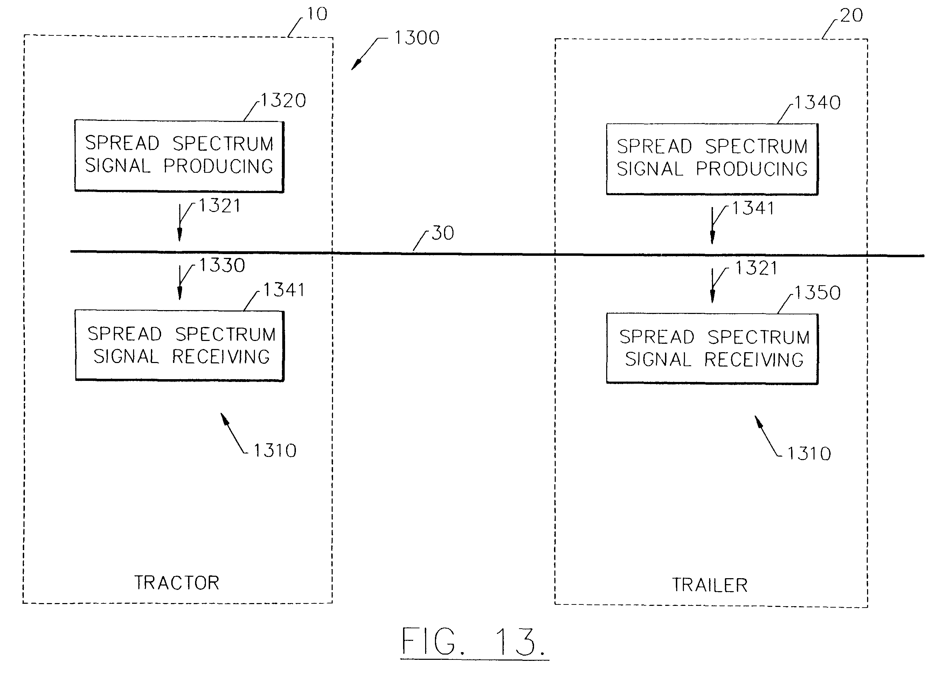

As illustrated in Fig. 13, a preferred embodiment of communications system **1300** for a tractor/trailer combination according to the present invention includes bidirectional communicating means **1305** for communicating a first spread spectrum data communications signal **1341** representing status of a first subsystem from a trailer **20** to a tractor **10** and for communicating a second spread spectrum data communications signal **1311** representing a command to a second subsystem from the tractor **10** to the trailer **20**, the spread spectrum data communications signals **1311**, **1341** being superposed on a power bus **30**. First spread spectrum signal producing means **1340**, positioned on a trailer **20** and responsive to the first subsystem, produces the first spread spectrum data communications signal **1341** on the power bus **30**. First spread spectrum signal receiving means **1320**, positioned on the tractor **10** and responsive receive the first spread spectrum data communications signal **1341**. Second spread spectrum signal producing means **1310**, positioned on the tractor **10** and electrically coupled to the power bus **30**, produces the second spread spectrum data communications signal **1311**. Second spread spectrum signal receiving means **1320**, positioned on the trailer **20** and responsive to the power bus **30**, receives the second spread spectrum data communications signal **1311**.

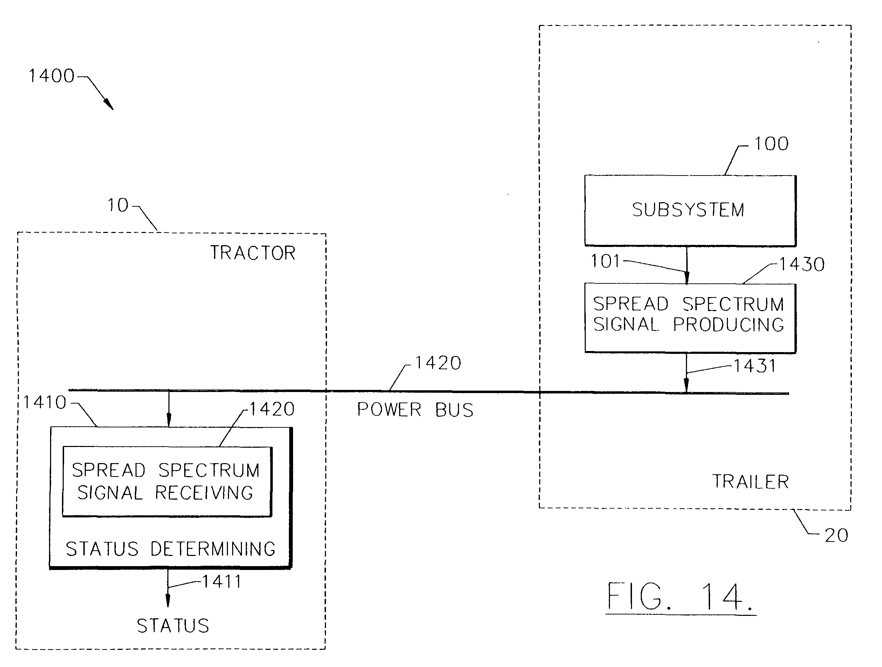

Fig. 14 illustrates a preferred embodiment of a communications system **1400** for communicating a status of a subsystem **100**, e.g., an antilock braking system, a trailer refrigeration system, a door sensor and the like. Spread spectrum signal producing means **1430**, positioned on a trailer **20**, produces a spread spectrum data communications signal **1431** on a power bus **30**, the spread spectrum data communications signal **1431** representing a status of the subsystem **100**. Preferably, the spread spectrum data communications signal **1431** is produced from a status signal **101** produced by the subsystem **100**. Status determining means **1410**, positioned on a tractor **10**, determines a status **1411** from the spread spectrum communications signal **1431**. Preferably, status determining means **1410** includes spread spectrum signal receiving means **1420** for receiving the spread spectrum data communications signal **1431**.

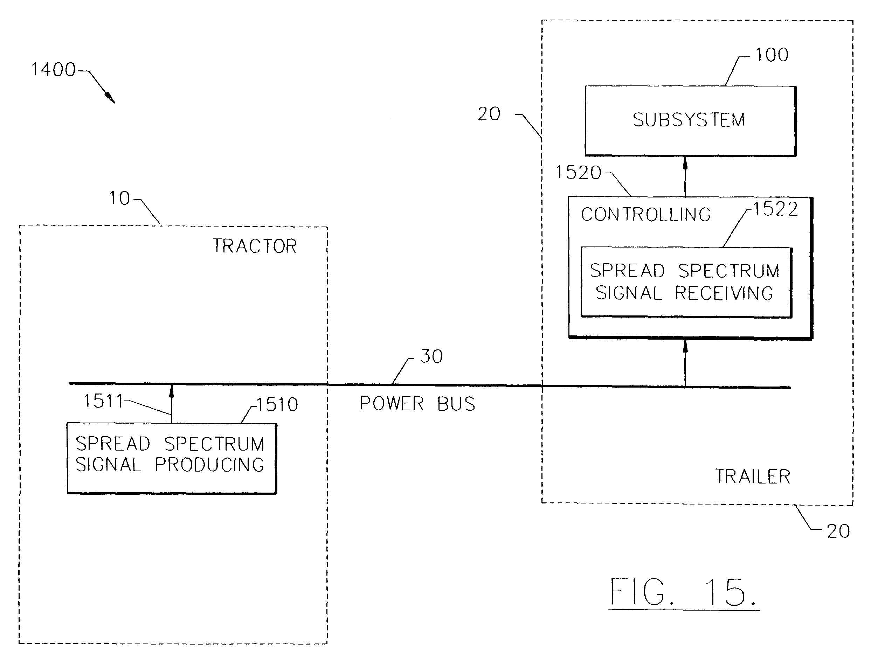

Fig. 15 illustrates a preferred embodiment of a communications system **1500** for communicating a command to a subsystem **100**, e.g., an antilock braking system, a trailer lighting system, and the like, from a tractor **10** to a trailer **20**. Spread spectrum signal producing means **1510** produces a spread spectrum data communications signal **1511** representing the command, on a power bus **30**. Controlling means **1520** controls the subsystem **100** based on the spread spectrum data communications signal **1511**. Preferably, the controlling means **1520** includes spread spectrum signal receiving means **1522** for receiving the spread spectrum data communications signal **1511**.

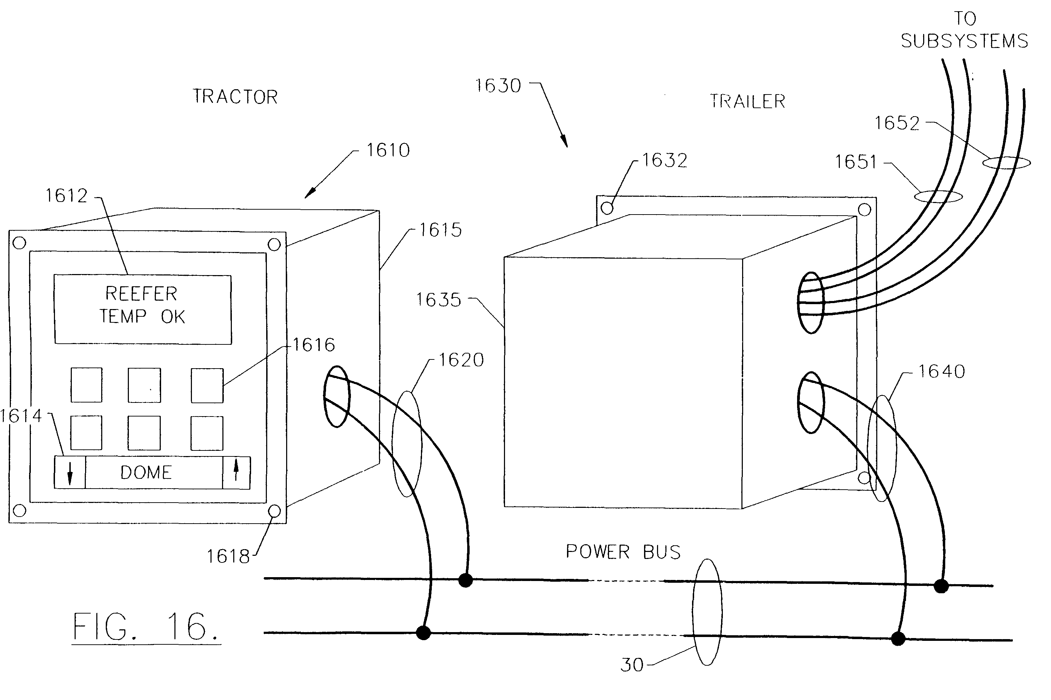

As illustrated in Fig. 16, the means of Figs. 14 and 15 may be included in a tractor communications module **1610** and a trailer communications module **1630** for connecting to a power bus **30**. The trailer communications module includes a communications module housing **1635**, which houses the module components, and means **1632** for mounting the housing **1435** to a trailer, such as a mounting flange with holes drilled therein. The trailer communications module **1630** preferably includes means **1640** for electrically connecting the module to the power bus **30**, a status signal input **1651**, and a command signal output **1652**, here illustrated as pigtail connections, although those skilled in the art will understand that other devices may be employed for the connecting means **1640**, the input **1651** and the output **1652**, such as connectors.

The tractor communications module **1610** preferably includes a communications module housing **1615** which houses the module components, and means **1518** for mounting the module **1610** to a tractor, such as a mounting flange with mounting holes drilled therethrough. The tractor communications module **1610** preferably includes an indicator such as an alphanumeric display **1612** and LED displays **1616**, which indicates a status to an operator, as well as operator input means such as a membrane switch **1614** positioned on the module **1610**, for receiving a command from an operator, as well as means **1620** for electrically connecting the module **1610** to the power bus **1620**.

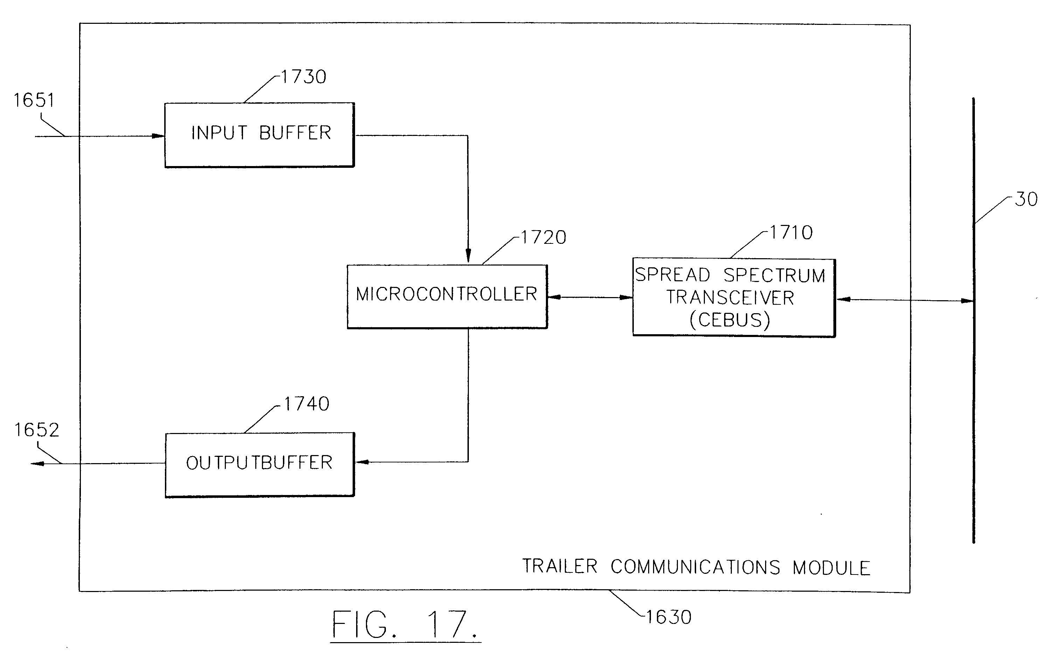

A preferred embodiment of a trailer communications module **1630** includes the spread spectrum signal producing means **1430** of Fig. 14, and the controlling means **1520** of Fig. 15, implemented as shown in FIG. 17 using a microcontroller **1720** connected to input and output buffer circuits **1730, 1740** and a spread spectrum transceiver **1710**, preferably a CEBus compliant transceiver such as the above-mentioned CEBus-compliant devices produced by the Intellon Corporation. In particular, these devices employ spread spectrum techniques and contention-resolving/collision detecting data transfer protocols to improve data communications, as described in U.S. Patent 5,090,024 to Vander Mey et al. These devices are designed to interface with a microcontroller or similar data processor via a parallel or serial data interface, producing spread spectrum data packets from data received from the processor over the interface and converting spread spectrum data packets into conventional digital signals which are conveyed to the data processor over the data interface.

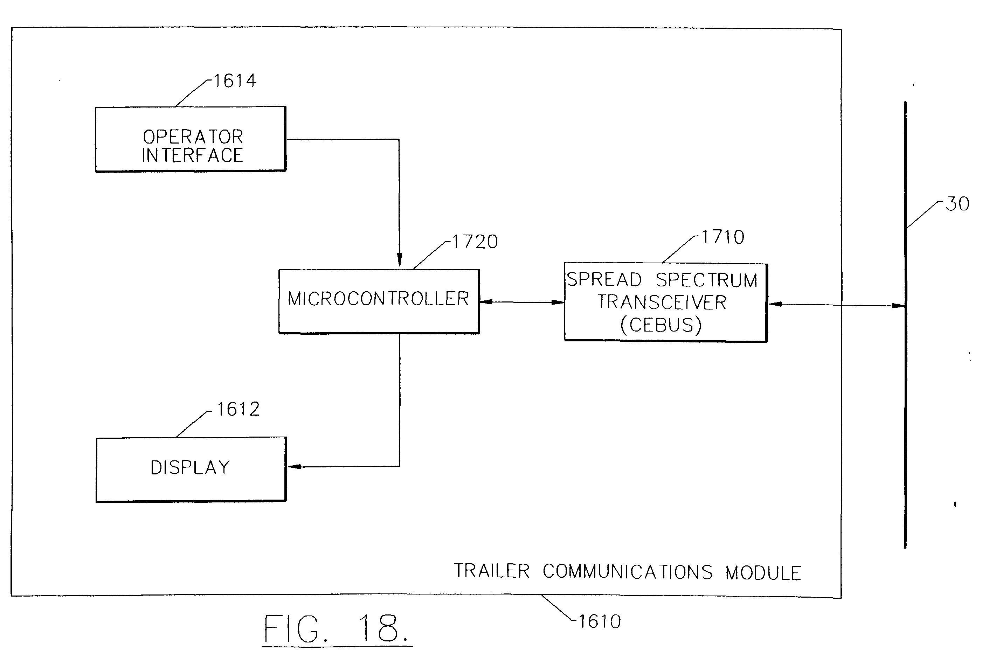

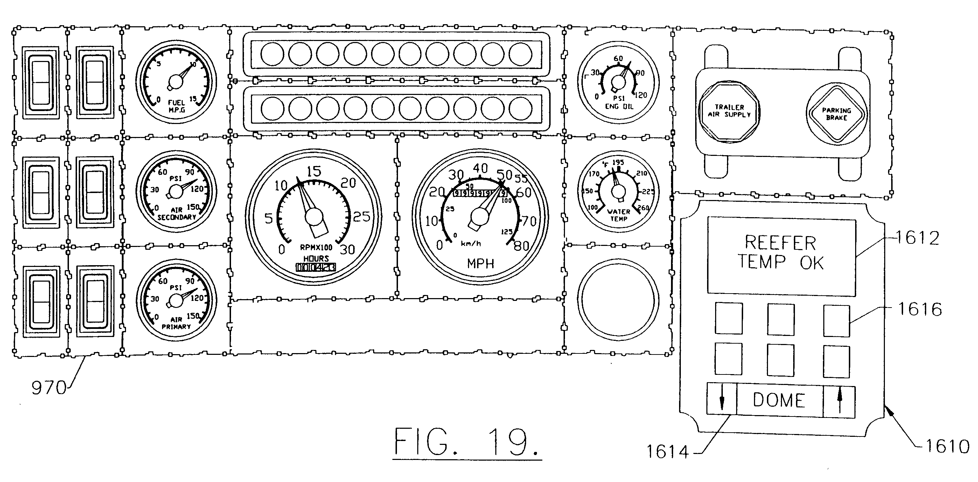

In a preferred embodiment of a tractor communications module **1630**, the status determining means **1420** of Fig. 14 and the spread spectrum signal producing means **1510** of Fig. 15 are similarly implemented using a microcontroller **1720** and a spread spectrum transceiver **1710**, as illustrated in Fig. 18. In the tractor communications module **1630**, however, the microcontroller **1720** interfaces with operator input means **1614** and an indicator **1612**, to receive commands from an operator and to indicate status to the operator. The use of microcontrollers to control displays and receive inputs from input devices is well-known to those skilled in the art, and need not be discussed in detail herein. As illustrated in Fig. 19, the tractor communications module **1610** may be mounted on the instrument cluster **970** of a tractor, such that the indicators **1612,1614** are viewable by an operator positioned in the tractor, and the operator input means **1514** is accessible to the operator.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A communications system (1300, 1400) for a combination of a tractor (10) and a trailer (20) mechanically and electrically connected to the tractor (10), for communicating a status of a subsystem positioned on the trailer (20) to the tractor (10), the system comprising:
a power bus (30) which supplies electrical power to the combination of the tractor (10) and the trailer (20);
power line carrier communicating means (320), responsive to the subsystem and positioned on the trailer (20), for producing a data communications signal on said power bus representing the status of the subsystem; and
status determining means (330, 1410), positioned on the tractor (10) and in electrical communication with said power bus (30), for determining a status of the subsystem positioned on the trailer (20);
**characterized in that** said power line carrier communicating means further comprises spread spectrum signal producing means (1340, 1430) for producing a spread spectrum data communications signal representing the status of the subsystem, wherein said spread spectrum signal producing means (1340, 1430) is in electrical communication with said power bus (30) and responsive to the subsystem, and produces a spread spectrum data communications signal representing the status of the subsystem on said power bus (30), and wherein said status determining means (330, 1410), responsive to said power bus (30), determines a status of the subsystem from the spread spectrum data communications signal.

2. A communications system (1300, 1400) according to claim 1, wherein the subsystem produces a status signal representing a status of the subsystem, and:
wherein said spread spectrum signal producing means (1340, 1430) comprises means for producing said spread spectrum data communications signal from the status signal; and
wherein said status determining means (330, 1410) comprises:
spread spectrum signal receiving means (1341, 1420), positioned on the tractor (10) responsive to the power bus (30), for receiving said spread spectrum data communications signal; and
means, positioned on the tractor (10) and responsive to said spread spectrum signal receiving means (1341, 1420), for determining a status of the subsystem from the received spread spectrum data communications signal.

3. A communications system (1300, 1400) according to claim 2;
wherein the power bus (30) comprises:
a first plurality of conductors (910), positioned in the trailer (20);
a second plurality of conductors (915),
positioned in the tractor (10); and
a connector (920) which electrically connects the first plurality of conductors (910) and the second plurality of conductors (915); and
wherein said spread spectrum signal producing means (1340, 1430) is electrically connected to a conductor of said first plurality of conductors (910); and
wherein said spread spectrum signal receiving means (1341, 1420) is electrically connected to a conductor of said second plurality of conductors (915).

4. A communications system (1300, 1400) according to claim 3, wherein said connector (920) comprises a SAE J560 seven-pin connector.

5. A communications system (1300, 1400) according to claim 1, further comprising:
second spread spectrum signal producing means (1320), positioned on the tractor (10) and electrically coupled to power bus (30), for producing a second spread spectrum data communications signal; and
second spread spectrum signal receiving means (1350), positioned on the trailer (20) and responsive to power bus (30), for receiving said second spread spectrum data communications signal.

6. A communications system (1300, 1400) according to claim 1, further comprising:
a warning indicator (1000) which indicates the status of an antilock braking system (100) on the trailer (20), said warning indicator (1000) being responsive to a status signal produced by antilock braking system (100); and
a trailer warning indicator package (1100), said spread spectrum signal producing means (1340, 1430) and said warning indicator (1000) being integrated in said trailer warning indicator package (1100), said trailer warning indictor package (1100) further including means for mounting said trailer warning indictor package (1100) on the trailer (20) so that said warning indicator (1000) is viewable by a tractor/trailer operator (1020) positioned within the tractor cab (1010).

7. A communications system (1300, 1400) according to claim 1, wherein said status determining means (330, 1410) comprises:
an indicator (950) which indicates a status of the subsystem to an operator (1020) positioned in the tractor (10).

8. A communications system (1300, 1400) according to claim 7, wherein the tractor (10) includes a cab (1010) having an instrument console (970) positioned therein, and wherein said indicator (950) comprises a display mounted on said instrument console.

9. A communications system (1300, 1400) according to claim 7, wherein said indicator (950) comprises at least one of an alphanumeric display (1612), an LED display (1616), and an audio annunciator.

10. A communications system (1300, 1400) according to claim 1, further comprising a tractor communications module housing (1615), mounted to said tractor (10), which houses said status determining means (330, 1410).

11. A communications system (1300, 1500) for connecting to a combination of a tractor (10) and a trailer (20) mechanically and electrically connected to the tractor (10) to communicate a command from the tractor (10) to a subsystem positioned on the trailer (20), the system comprising:
a power bus (30) which supplies electrical power to the combination of the tractor (10) and the trailer (20);
power line carrier communicating means (320), positioned on the tractor (10), for producing a data communications signal on said power bus (30); and
controlling means (1520), positioned on the trailer (20) and in electrical communication with said power bus (30), for controlling the subsystem;
**characterized in that** said power line carrier communicating means (320) comprises spread spectrum signal producing means (1320, 1510) for producing a spread spectrum data communications signal representing the command, wherein said spread spectrum signal producing means (1320, 1510), is in electrical communication with said power bus (30) and produces a spread spectrum data communications signal representing the command on said power bus (30), and wherein said controlling means (1520) controls the subsystem based on the spread spectrum data communications signal.

12. A communications system (1300, 1500) according to claim 11,
wherein said spread spectrum signal producing means (1320, 1510) comprises means for producing said spread spectrum data communications signal from the command; and
wherein said controlling means (1520) comprises:
spread spectrum signal receiving means (1350, 1522), positioned on the trailer (20) and responsive to said power bus (30), for receiving said spread spectrum data communications signal; and
means for controlling the subsystem from the received spread spectrum data communications signal.

13. A communications system (1300, 1500) according to claim 12;
wherein the power bus (30) comprises:
a first plurality of conductors (910), positioned in the trailer (20);
a second plurality of conductors (915), positioned in the tractor (10); and
a connector (920) which electrically connects the first plurality of conductors (910) and the second plurality of conductors (915); and
wherein said spread spectrum signal producing means (1320, 1510) is electrically connected to a conductor of said second plurality of conductors (915); and
wherein said spread spectrum signal receiving means (1350, 1522) is electrically connected to a conductor of said first plurality of conductors (910).

14. A communications system (1300, 1500) according to claim 13, wherein said connector (920) comprises a SAE J560 seven-pin connector.

15. A communications system (1300, 1500) according to claim 11, further comprising:
second spread spectrum signal producing means (1340), positioned on the trailer (20), electrically coupled to the power bus (30) and responsive to a first subsystem on the trailer, for producing a spread spectrum data communications signal from a status signal provided by the first subsystem; and
second spread spectrum signal receiving means (1341), positioned on the tractor (10) and responsive to the power bus (30), for receiving said first spread spectrum data communications signal.

16. A communications system (1300, 1500) according to claim 11, further comprising operator input means for receiving a command from an operator (1020) positioned on the tractor (10), and wherein said spread spectrum signal producing means (1320, 1510) comprises means for producing a spread spectrum data communications signal representing the conveyed command.

17. A communications system (1300, 1500) according to claim 16, wherein the tractor (10) includes a cab (1010) having an instrument console (970) positioned therein, and wherein said operator input means comprises a switch (1614) mounted on said instrument console (970).

18. A communications system (1300, 1500) according to claim 11, further comprising operator input means for receiving a command from an operator positioned on the tractor (10), and wherein said spread spectrum signal producing means (1320, 1510) comprises means for producing a spread spectrum data communications signal representing the received command.

19. A communications system (1300, 1500) according to claim 11, further comprising:
a tractor communications module housing (1650), mounted to said tractor (10), which houses said spread spectrum signal producing means (1320, 1510).

20. A communications module (1630) for connecting to a trailer (20) having a power bus (30) for receiving power from a tractor (10) mechanically and electrically connected to the trailer (20), the module (1630) comprising:
a status signal input (1651);
a command signal output (1652); and
power line carrier communicating means (320) responsive to said status signal input (1651), for producing a data communications signal on said power bus (30);
**characterized in that** said power line carrier communicating means comprises spread spectrum signal producing means (1340, 1430) for producing a spread spectrum data communications signal from a status signal provided at said status signal input (1651),
wherein said module further comprises means for coupling said spread spectrum signal producing means (1340, 1430) to the power bus (30) such that a spread spectrum data communications signal produced by said spread spectrum signal producing means (1340, 1430) is superposed on the power bus (30),
wherein said power line carrier communicating means further comprises spread spectrum signal receiving means (1350, 1522) for receiving a spread spectrum data communications signal and for producing a command signal at said command signal output (1652) from the received spread spectrum data communications signal,
and wherein said module further comprises means for electrically coupling said spread spectrum signal receiving means (1350, 1522) to the power bus (30) such that a spread spectrum data communications signal superposed on the power bus (30) is received by said spread spectrum signal receiving means (1350, 1522).

21. A communications module (1630) according to claim 20, further comprising:
a communications module housing (1635) which houses said spread spectrum signal receiving means (1350, 1522) and said spread spectrum signal producing means (1340, 1430); and
means (1632) for mounting said communications module housing (1635) to a trailer (20).

22. A communications module (1610) for connecting to a tractor (10) having a power bus (30) which supplies electrical power to the tractor (10), the communications module (1610) comprising:
a command input; and
power line carrier communicating means, responsive to said command input, for producing a data communications signal on said power bus (30);
**characterized in that** said power line carrier communicating means comprises spread spectrum signal producing means (1320, 1510) for producing a spread spectrum data communications signal from a command provided at said command input,
wherein said module (1610) further comprises means for coupling said spread spectrum signal producing means (1320, 1510) to the power bus (30) such that a spread spectrum data communications signal produced by said spread spectrum signal producing means (1320, 1510) is superposed on the power bus (30),
wherein said power line carrier communicating means further comprises spread spectrum signal receiving means (1341, 1420) for receiving a spread spectrum data communications signal,
and wherein said module (1610) further comprises means for electrically coupling said spread spectrum signal receiving means (1341, 1420) to the power bus (30) such that a spread spectrum data communications signal superposed on the power bus (30) is received by said spread spectrum signal receiving means (1341, 1420).

23. A communications module (1610) according to claim 22, further comprising:
a communications module housing (1615) which houses said spread spectrum signal producing means (1320, 1510) and said spread spectrum signal receiving means (1341, 1420); and
means (1518) for mounting said communications module housing (1615) on a tractor (10).

24. A communications module (1610) according to claim 22, wherein the spread spectrum data communications signal superposed on the power bus (30) represents a status of a subsystem, and further comprising status determining means (1410), responsive to said spread spectrum signal receiving means (1341, 1420), for determining a status of the subsystem from the received spread spectrum data communications signal.

25. A communications module (1610) according to claim 24, wherein said status determining means (1410) comprises:
an indicator (950) which indicates a status of the subsystem; and
means for mounting said indicator (950) on the tractor (10) such that the indicator (950) is viewable by an operator (1010) positioned in the tractor (10).

26. A communications module (1610) according to claim 25, further comprising;
a communications module housing (1615) which houses said spread spectrum signal producing means (1340, 1430), said spread spectrum signal receiving means (1350, 1522) and said indicator (950); and
means (1518) for mounting said communications module housing (1615) on the tractor (10) such that said indicator (950) is viewable by an operator (1010) positioned on the tractor (10).

27. A communications module (1610) according to claim 22, wherein said command input comprises:
operator input means for receiving a command from an operator (1010).

28. A communications module (1610) according to claim 27, further comprising:
a communications module housing (1615) which houses said spread spectrum signal producing means (1340, 1430) and said operator input means; and
means (1518) for mounting said communications module (1610) on the tractor (10) such that said operator input means is accessible to an operator (1010) positioned on the tractor (10).

29. A method of monitoring a system positioned on a trailer (20) that produces a data signal representing a status of the system and a power bus (30) which distributes electrical power to the trailer (20) and a tractor (10) connected thereto, the method comprising the steps of:
producing a data communications signal from the data signal;
modulating the data communications signal;
communicating said data communications signal over the power bus; and
determining the status of the system from the communicated data communications signal;
**characterized in that** said modulating step comprises modulating the data communications signal to produce a spread spectrum data communications signal,
wherein said communicating step comprises superposing the spread spectrum data communications signal on the power bus (30), at the trailer (20),
and wherein said step of determining comprises the steps of:
receiving the superposed spread spectrum data communications signal; and
determining the status of the system from the received spread spectrum data communications signal.

30. A method according to claim 29, wherein said step of determining comprises the step of:
indicating a status of the system to an operator (1010) positioned on the tractor (10).

31. A method of communicating a command from a tractor (10) to a system positioned on a trailer (20) electrically and mechanically connected to the tractor (10), the tractor (10) and the trailer (20) combination including a power bus (30) which supplies electrical power to the tractor (10) and the trailer (20), the method comprising the steps of:
modulating a data communications signal representing the command;
receiving the communications signal at the trailer (20); and
controlling the system based on the communications signal;
**characterized in that** said modulating step comprises the steps of:
modulating the data communications signal to produce a spread spectrum data communications signal representing the command; and
superposing the spread spectrum data communications signal on the power bus (30), at the tractor (10),
wherein said receiving step comprises receiving the superposed spread spectrum data communications signal from the power bus, at the trailer (20),
and wherein said controlling step comprises controlling the system based on the spread spectrum data communications signal.

32. A method according to claim 31, wherein said step of communicating is preceded by the step of receiving a command from an operator (1010) positioned on the tractor (100).

33. A method according to claim 31, wherein said step of controlling the system comprises the step of:
producing a command signal from the spread spectrum data communications signal.

## Patentansprüche

1. Kommunikationssystem (1300, 1400) für eine Kombination einer Zugmaschine (10) mit einem Anhänger (20), der mechanisch und elektrisch mit der Zugmaschine verbunden ist, zur Übermittlung eines Status eines an dem Anhänger (20) angeordneten Untersystems an die Zugmaschine (10), wobei das System umfaßt:
einen Strombus (30), der die Kombination der Zugmaschine (10) mit dem Anhänger (20) mit elektrischem Strom versorgt;
ein Stromleitungskommunikationsmittel (320), das auf das Untersystem anspricht und an dem Anhänger (20) angeordnet ist, zum Erzeugen eines Datenübermittlungssignals, das den Status des Untersystems darstellt, in dem Strombus, und ein Statusbestimmungsmittel (330, 1410), das an der Zugmaschine (10) angeordnet ist und mit dem Strombus (30) in elektrischer Verbindung steht, zum Bestimmen eines Status des Untersystems, das am Anhänger (20) angeordnet ist;
**dadurch gekennzeichnet, daß** das Stromleitungskommunikationsmittel des weiteren ein Streuspektrum-Signalerzeugungsmittel (1340, 1430) zum Erzeugen eines Streuspektrum-Datenübermittlungssignals umfaßt, das den Status des Untersystems darstellt, wobei das Streuspektrum-Signalerzeugungsmittel (1340, 1430) in elektrischer Verbindung mit dem Strombus (30) steht und auf das Untersystem anspricht und ein Streuspektrum-Datenübermittlungssignal erzeugt, das den Status des Untersystems in dem Strombus (30) darstellt, und wobei das Statusbestimmungsmittel (330, 1410), das auf den Strombus (30) anspricht, einen Status des Untersystems aus dem Streuspektrum-Datenübermittlungssignal bestimmt.

2. Kommunikationssystem (1300, 1400) nach Anspruch 1, bei dem das Untersystem ein Statussignal erzeugt, das den Status des Untersystems darstellt,
bei dem das Streuspektrum-Signalerzeugungsmittel (1340, 1430) Mittel zum Erzeugen des Streuspektrum-Datenübermittlungssignals aus dem Statussignal umfaßt und
bei dem das Statusbestimmungsmittel (330, 1410) umfaßt:
ein Streuspektrum-Signalempfangsmittel (1341, 1420), das an der Zugmaschine (10) angeordnet ist und auf den Strombus (30) anspricht, zum Empfangen des Streuspektrum-Datenübermittlungssignals; und
Mittel, die an der Zugmaschine (10) angeordnet sind und auf das Streuspektrum-Signalempfangsmittel (1341, 1420) ansprechen, zum Bestimmen eines Status des Untersystems aus dem empfangenen Streuspektrum-Datenübermittlungssignal.

3. Kommunikationssystem (1300, 1400) nach Anspruch 2;
bei dem der Strombus (30) umfaßt;
eine erste Mehrzahl von Leitern (910), die im Anhänger (20) angeordnet ist,
eine zweite Mehrzahl von Leitern (915), die in der Zugmaschine (10) angeordnet ist, und
einen Stecker (920), der die erste Mehrzahl von Leitern (910) und die zweite Mehrzahl von Leitern (915) miteinander verbindet, und
bei dem das Streuspektrum-Signalerzeugungsmittel (1340,1430) mit einem Leiter der ersten Mehrzahl von Leitern (910) elektrisch verbunden ist, und
bei dem das Streuspektrum-Signalempfangsmittel (1341, 1420) mit einem Leiter der zweiten Mehrzahl von Leitern (915) elektrisch verbunden ist.

4. Kommunikationssystem (1300,1400) nach Anspruch 3, bei dem der Stecker (920) einen 7-poligen SAE J560-Stecker umfaßt.

5. Kommunikationssystem (1300, 1400) nach Anspruch 1, des weiteren umfassend:
ein zweites Streuspektrum-Signalerzeugungsmittel (1320), das an der Zugmaschine (10) angeordnet und elektrisch mit dem Strombus (30) gekuppelt ist, zum Erzeugen eines zweiten Streuspektrum-Datenübermittlungssignals; und
ein zweites Streuspektrum-Signalempfangsmittel (1350), das am Anhänger (20) angeordnet ist und auf den Strombus (30) anspricht, zum Empfangen des zweiten Streuspektrum-Datenübermittlungssignals.

6. Kommunikationssystem (1300, 1400) nach Anspruch 1, des weiteren umfassend:
einen Warnanzeiger (1000), der den Status eines Antiblockiersystems (100) an dem Anhänger (20) anzeigt, wobei der Warnanzeiger (1000) auf ein Statussignal, das durch das Antiblockiersystem (100) erzeugt wird, anspricht, und
ein Anhängerwamanzeigenpaket (1100), wobei das Streuspektrum-Signalerzeugungsmittel (1340, 1430) und der Warnanzeiger (1000) in dem Anhängerwarnanzeigenpaket (1100) integriert sind, und wobei das Anhängerwarnanzeigenpaket (1100) ferner Mittel zum Befestigen des Anhängerwarnanzeigenpakets (1100) an dem Anhänger(20) einschließt, so daß der Warnanzeiger (1000) für einen Zugmaschine/Anhänger-Führer (1020), der sich in dem Zugmaschinenführerhaus (1010) befindet, sichtbar ist.

7. Kommunikationssystem (1300, 1400) nach Anspruch 1, bei dem das Statusbestimmungsmittel (330, 1410) umfaßt:
einen Anzeiger (950), der einem Führer (1020), der sich in der Zugmaschine (10) befindet, einen Status des Untersystems anzeigt.

8. Kommunikationssystem (1300, 1400) nach Anspruch 7, bei dem die Zugmaschine (10) ein Führerhaus (1010) umfaßt, in dem eine Armaturenkonsole (970) angeordnet ist, und bei dem der Anzeiger (950) ein Display umfaßt, das auf der Armaturenkonsole angebracht ist.

9. Kommunikationssystem (1300, 1400) nach Anspruch 7, bei dem der Anzeiger (950) zumindest ein alphanumerisches Display (1612), ein LED-Display (1616) oder einen Tonmelder umfaßt.

10. Kommunikationssystem (1300, 1400) nach Anspruch 1, des weiteren umfassend ein Zugmaschinenkommunikationsmodul-Gehäuse (1615), das an der Zugmaschine (10) befestigt ist und das Statusbestimmungsmittel (330, 1410) aufnimmt.

11. Kommunikationssystem (1300, 1500) zum Anschließen an eine Kombination einer Zugmaschine (10) mit einem Anhänger (20), der mechanisch und elektrisch mit der Zugmaschine (10) verbunden ist, zum Übermitteln eines Befehls von der Zugmaschine (10) an ein Untersystem, das an dem Anhänger (20) angeordnet ist, wobei das System umfaßt:
einen Strombus (30), der die Kombination der Zugmaschine (10) mit dem Anhänger (20) mit elektrischem Strom versorgt;
ein Stromleitungskommunikationsmittel (320), das an dem Anhänger (20) angeordnet ist, zum Erzeugen eines Datenübermittlungssignals im dem Strombus (30), und
ein Steuermittel (1520), das am Anhänger (20) angeordnet ist und mit dem Strombus (30) in elektrischer Verbindung steht, zum Steuern des Untersystems;
**dadurch gekennzeichnet, daß** das Stromleitungskommunikationsmittel (320) ein Streuspektrum-Signalerzeugungsmittel (1320, 1510) zum Erzeugen eines Streuspektrum-Datenübermittlungssignals umfaßt, das den Befehl darstellt, wobei das Streuspektrum-Signalerzeugungsmittel (1320, 1510) in elektrischer Kommunikation mit dem Strombus (30) steht und ein Streuspektrum-Datenübermittlungssignal erzeugt, das den Befehl im dem Strombus (30) darstellt, und wobei das Steuermittel (1520) das Untersystem auf der Grundlage des Streuspektrum-Datenübermittlungssignals steuert.

12. Kommunikationssystem (1300, 1500) nach Anspruch 11, bei dem das Streuspektrum-Signalerzeugungsmittel (1320, 1510) Mittel zum Erzeugen des Streuspektrum-Datenübermittlungssignals aus dem Befehl umfaßt, und
bei dem das Steuermittel (1520) umfaßt:
ein Streuspektrum-Signalempfangsmittel (1350, 1522), das an dem Anhänger (20) angeordnet ist und auf den Strombus (30) anspricht, zum Empfangen des Streuspektrum-Datenübermittlungssignals; und
ein Mittel zum Steuern des Untersystems aus dem empfangenen Streuspektrum-Datenübermittlungssignal.

13. Kommunikationssystem (1300, 1500) nach Anspruch 12,
bei dem der Strombus (30) umfaßt:
eine erste Mehrzahl von Leitern (910), die im Anhänger (20) angeordnet ist,
eine zweite Mehrzahl von Leitern (915), die in der Zugmaschine (10) angeordnet ist, und
einen Stecker (920), der die erste Mehrzahl von Leitern (910) und die zweite Mehrzahl von Leitern (915) miteinander verbindet, und
bei dem das Streuspektrum-Signalerzeugungsmittel (1320, 1510) mit einem Leiter der zweiten Vielzahl von Leitern (915) elektrisch verbunden ist; und
bei dem das Streuspektrum-Signalempfangsmittel (1350, 1522) mit einem Leiter der ersten Mehrzahl von Leitern (910) elektrisch verbunden ist.

14. Kommunikationssystem (1300, 1500) nach Anspruch 13, bei dem der Stecker (920) einen 7-poligen SAE J560-Stecker umfaßt.

15. Kommunikationssystem (1300,1500) nach Anspruch 11, des weiteren umfassend:
ein zweites Streuspektrum-Signalerzeugungsmittel (1340), das an dem Anhänger (20) angeordnet, elektrisch mit dem Strombus (30) gekuppelt ist und auf das erste Untersystem an dem Anhänger anspricht, zum Erzeugen eines Streuspektrum-Datenübermittlungssignals aus einem Statussignal, das durch das erste Untersystem bereitgestellt ist; und
ein zweites Streuspektrum-Signalempfangsmittel (1341), das an der Zugmaschine (10) angeordnet ist und auf den Strombus (30) anspricht, zum Empfangen des ersten Streuspektrum-Datenübermittlungssignals.

16. Kommunikationssystem (1300, 1500) nach Anspruch 11, des weiteren umfassend ein Führereingabemittel zum Empfangen eines Befehls eines Führers (1020), der sich in der Zugmaschine (10) befindet, wobei das Streuspektrum-Signalerzeugungsmittel (1320, 1510) Mittel zum Erzeugen eines Streuspektrum-Datenübermittlungssignals aufweist, das den übermittelten Befehl darstellt.

17. Kommunikationssystem (1300, 1500) nach Anspruch 16, bei dem die Zugmaschine (10) ein Führerhaus (1010) aufweist, in dem eine Armaturenkonsole (970) angeordnet ist, und bei dem das Führereingabemittel (1614) einen Schalter aufweist, der auf der Armaturenkonsole (970) montiert ist.

18. Kommunikationssystem (1300, 1500) nach Anspruch 11, des weiteren umfassend ein Führereingabemittel zum Empfangen eines Befehls eines Führers (1020), der sich in der Zugmaschine (10) befindet, und bei dem das Streuspektrum-Signalerzeugungsmittel (1320, 1510) ein Mittel zum Erzeugen eines Streuspektrum-Datenübermittlungssignals umfaßt, das den empfangenen Befehl darstellt.

19. Kommunikationssystem (1300, 1500) nach Anspruch 11, des weiteren umfassend ein Zugmaschinenkommunikationsmodul-Gehäuse (1650), das an der Zugmaschine (10) befestigt ist und das Streuspektrum-Signalerzeugungsmittel (1320, 1510) aufnimmt.

20. Kommunikationsmodul (1630) zum Anschließen an einen Anhänger (20), der einen Strombus (30) zum Versorgen mit Strom von einer Zugmaschine (10), die mechanisch und elektrisch mit dem Anhänger (20) verbunden ist, aufweist, bei dem das Modul (1630) umfaßt:
eine Statussignaleingabe (1651),
eine Befehlssignalausgabe (1652), und
ein Stromleitungskommunikationsmittel (320), das auf die Statussignaleingabe (1651) anspricht, zum Erzeugen eines Datenübermittlungssignals in dem Strombus (30);
**dadurch gekennzeichnet, daß** das Stromleitungskommunikationsmittel ein Streuspektrum-Signalerzeugungsmittel (1340, 1430) zum Erzeugen eines Streuspektrum-Datenübermittlungssignals aus einem Statussignal umfaßt, das an der Statussignaleingabe (1651) bereitgestellt ist,
wobei das Modul ferner Mittel zum Kuppeln des Streuspektrum-Signalerzeugungsmittels (1340, 1430) an den Strombus (30) umfaßt, derart, daß ein Streuspektrum-Datenübermittlungssignal, das durch das Streuspektrum-Signalerzeugungsmittel (1340, 1430) erzeugt wird, in dem Stromsammelschiene (30) überlagert wird,
wobei das Stromleitungsträger-Übermittlungsmittel ferner ein Streuspektrum-Signalempfangsmittel (1350, 1522) zum Empfangen eines Streuspektrum-Datenübermittlungssignals und zum Erzeugen eines Befehlssignals an der Befehlssignalausgabe (1652) aus dem empfangenen Streuspektrum-Datenübermittlungssignal umfaßt,
und wobei das Modul ferner Mittel zum elektrischen Kuppeln des Streuspektrum-Signalempfangsmittels (1350, 1522) an den Strombus (30) umfaßt, derart, dass ein Streuspektrum-Datenübermittlungssignal, das auf den Strombus (30) überlagert ist, von dem Streuspektrum-Signalempfangsmittel (1350, 1522) empfangen wird.

21. Kommunikationsmodul (1630) nach Anspruch 20, des weiteren umfassend:
ein Kommunikationsmodul-Gehäuse (1635), das das Streuspektrum-Signalempfangsmittel (1350, 1522) und das Streuspektrum-Signalerzeugungsmittel (1340,1430) aufnimmt, und
Mittel (1362) zur Befestigung des Kommunikationsmodul-Gehäuses (1635) an einem Anhänger (20).

22. Kommunikationsmodul (1610) zum Anschließen an eine Zugmaschine (10), die einen Strombus (30) aufweist, der die Zugmaschine mit elektrischem Strom versorgt, wobei das Modul (1610) umfaßt:
eine Befehlseingabe; und
ein Stromleitungskommunikationsmittel, das auf die Befehlseingabe anspricht, zum Erzeugen eines Datenübermittlungssignals in dem Strombus (30);
**dadurch gekennzeichnet, daß** das Stromleitungskommunikationsmittel das Streuspektrum-Signalerzeugungsmittel (1320, 1510) zum Erzeugen eines Streuspektrum-Datenübermittlungssignals aus einem Befehl umfaßt, der an der Befehlseingabe bereitgestellt ist,
wobei das Modul (1610) ferner Mittel zum Kuppeln des Streuspektrum-Signalerzeugungsmittels (1320, 1510) an den Strombus (30) umfaßt, derart, daß ein Streuspektrum-Datenübermittlungssignal, das durch das Streuspektrum-Signalerzeugungsmittel (1320, 1510) erzeugt ist, auf den Strombus (30) überlagert wird,
wobei das Stromleitungskommunikationsmittel ferner ein Streuspektrum-Signalempfangsmittel (1341, 1420) zum Empfangen eines Streuspektrum-Datenübermittlungssignals umfaßt
und wobei das Modul (1610) ferner Mittel zum elektrischen Kuppeln des Streuspektrum-Signalempfangsmittels (1341, 1420) an den Strombus (30) umfaßt, derart, daß ein Streuspektrum-Datenübermittlungssignal, das auf den Strombus (30) überlagert ist, von dem Streuspektrum-Signalempfangsmittel (1341, 1420) empfangen wird.

23. Kommunikationsmodul (1610) nach Anspruch 22, des weiteren umfassend:
ein Kommunikationsmodul-Gehäuse (1615), das das Streuspektrum-Signalerzeugungsmittel (1320, 1510) und das Streuspektrum-Signalempfangsmittel (1341, 1420) aufnimmt, und Mittel (1518) zum Befestigen des Kommunikationsmodul-Gehäuses (1615) an einer Zugmaschine (10).

24. Kommunikationsmodul (1610) nach Anspruch 22, bei dem das Streuspektrum-Datenübermittlungssignal, das auf den Strombus (30) überlagert ist, einen Status eines Untersystems darstellt, und ferner umfassend ein Statusbestimmungsmittel (1410), das auf das Streuspektrum-Signalempfangsmittel (1341, 1420) anspricht, zum Bestimmen eines Status des Untersystems aus dem empfangenen Streuspektrum-Datenübermittlungssignal.

25. Kommunikationsmodul (1610) nach Anspruch 24, bei dem das Statusbestimmungsmittel (1410) umfaßt:
einen Anzeiger (950), der einen Status des Untersystems anzeigt; und Mittel zum Befestigen des Anzeigers (950) an der Zugmaschine (10), derart, daß der Anzeiger (950) für einen Führer (1010), der sich in der Zugmaschine (10) befindet, sichtbar ist.

26. Kommunikationsmodul (1610) nach Anspruch 25, des weiteren umfassend:
ein Kommunikationsmodul-Gehäuse (1615), das das Streuspektrum-Signalerzeugungsmittel (1340, 1430), das Streuspektrum-Signalempfangsmittel (1350, 1522) und den Anzeiger (950) aufnimmt; und
Mittel (1518) zum Befestigen des Kommunikationsmodul-Gehäuses (1615) an der Zugmaschine (10), derart, daß der Anzeiger (950) für einen Führer (1010), der sich in der Zugmaschine (10) befindet, sichtbar ist.

27. Kommunikationsmodul (1610) nach Anspruch 22, bei dem die Befehlseingabe ein Führereingabemittel zum Empfangen eines Befehls von einem Führer (1010) umfaßt.

28. Kommunikationsmodul (1610) nach Anspruch 27, des weiteren umfassend:
ein Kommunikationsmodul-Gehäuse (1615), das das Streuspektrum-Signalerzeugungsmittel (1340, 1430) und das Führereingabemittel aufnimmt, und
Mittel (1518) zum Befestigen des Kommunikationsmoduls (1610) an der Zugmaschine (10), derart, daß das Führereingabemittel für einen Führer (1010), der sich in der Zugmaschine (10) befindet, zugänglich ist.

29. Verfahren zum Überwachen eines Systems, das an einem Anhänger (20) angeordnet ist und ein Datensignal erzeugt, das einen Status des Systems darstellt, und eines Strombus (30), der den Anhänger (20) und eine damit verbundene Zugmaschine (10) mit elektrischem Strom versorgt, wobei das Verfahren folgende Schritte umfaßt:
Erzeugen eines Datenübermittlungssignals aus dem Datensignal;
Modulieren des Datenübermittlungssignals;
Übermitteln des Datenübermittlungssignals über den Strombus, und
Bestimmen des Status des Systems aus dem übermittelten Datenübermittlungssignal;
**dadurch gekennzeichnet, daß** der genannte Schritt des Modulierens das Modulieren des Datenübermittlungssignals umfaßt, um ein Streuspektrum-Datenübermittlungssignals zu erzeugen,
daß der genannte Schritt des Übermittelns das Überlagern des Streuspektrum-Datenübermittlungssignals in den Strombus (30) an dem Anhänger (20) umfaßt,
und daß der genannte Schritt des Bestimmens die Schritte des
Empfangens des überlagerten Streuspektrum-Datenübermittlungssignals und des Bestimmens des Status des Systems aus dem empfangenen Streuspektrum-Datenübermittlungssignal umfaßt.

30. Verfahren nach Anspruch 29, bei dem der genannte Schritt des Bestimmens den Schritt des Anzeigens eines Status des Systems an einen Führer (1010), der sich in der Zugmaschine (10) befindet, umfaßt.

31. Verfahren zum Übermitteln eines Befehls von einer Zugmaschine (10) an ein System, das an einem Anhänger (20) angeordnet ist, der elektrisch und mechanisch mit der Zugmaschine (10) verbunden ist, wobei die Kombination der Zugmaschine (10) mit dem Anhänger (20) einen Strombus (30) einschließt, der elektrischen Strom an die Zugmaschine (10) und den Anhänger (20) liefert, wobei das Verfahren folgende Schritte umfaßt:
Modulieren eines Datenübermittlungssignals, das den Befehl darstellt;
Empfangen des Übermittlungssignals an dem Anhänger (20); und
Steuern des Systems auf der Grundlage des Übermittlungssignals;
**dadurch gekennzeichnet, daß** der genannte Schritt des Modulierens die Schritte des Modulierens des Datenübermittlungssignals, um ein Streuspektrum-Datenübermittlungssignal, das den Befehl darstellt, zu erzeugen, und des Überiagems des Streuspektrum-Datenübermittlungssignals in dem Strombus (30) an der Zugmaschine (10) umfaßt,
daß der genannte Schritt des Empfangens das Empfangen des überlagerten Streuspektrum-Datenübermittlungssignals von dem Strombus (30)an dem Anhänger (20) umfaßt,
und daß der genannte Schritt des Steuems das Steuern des Systems auf der Grundlage des Streuspektrum-Datenübermittlungssignals umfaßt.

32. Verfahren nach Anspruch 31, bei dem der genannte Schritt des Übermittelns dem Schritt des Empfangens eines Befehls von einem Führer (1010), der sich in der Zugmaschine (10) befindet, vorausgeht.

33. Verfahren nach Anspruch 31, bei dem der genannte Schritt des Steuerns des Systems den Schritt des Erzeugens eines Befehlssignals aus dem Streuspektrum-Datenübermittlungssignal umfaßt.

## Revendications

1. Système de communication (1300, 1400) pour la combinaison d'un tracteur (10) et d'une remorque (20) reliée mécaniquement et électriquement au tracteur (10), pour communiquer au tracteur (10) l'état d'un sous-système situé sur la remorque (20), ledit système comprenant :
un bus de puissance (30) qui alimente la combinaison du tracteur (10) et de la remorque (20) en énergie électrique ;
un moyen de communication par courants porteurs sur ligne à haute tension (320), sensible au sous-système et situé sur la remorque (20) pour produire un signal de communication de données sur ledit bus de puissance représentant l'état du sous-système ; et
un moyen de détermination de l'état (330, 1410), situé sur le tracteur (10), et en communication électrique avec ledit bus de puissance (30), pour déterminer un état du sous-système situé sur la remorque (20) ;
**caractérisé en ce que** ledit moyen de communication par courants porteurs sur ligne à haute tension comprend aussi un moyen de production de signaux à spectre étalé (1340, 1430) pour produire un signal de communication de données par étalement du spectre représentant l'état du sous-système, dans lequel ledit moyen de production de signaux à spectre étalé (1340, 1430) est en communication électrique avec ledit bus de puissance (30) et est sensible au sous-système et produit un signal de communication de données par étalement du spectre représentant l'état du sous-système sur ledit bus de puissance (30), et dans lequel ledit moyen de détermination de l'état (330, 1410), sensible audit bus de puissance (30), détermine un état du sous-système à partir du signal de communication de données par étalement du spectre.

2. Système de communication (1300, 1400) selon la revendication 1, dans leqùel le sous-système produit un signal d'état représentant un état du sous-système, et :
dans lequel ledit moyen de production de signaux à spectre étalé (1340, 1430) comprend un moyen pour produire ledit signal de communication de données par étalement du spectre ; et
dans lequel ledit moyen de détermination de l'état (330, 1410) comprend :
un moyen de réception des signaux à spectre étalé (1341, 1420), situé sur le tracteur (10) et sensible au bus de puissance (30), pour recevoir ledit signal de communication de données par étalement du spectre ; et
un moyen, situé sur le tracteur (10) et sensible audit moyen de réception des signaux à spectre étalé (1341, 1420), pour déterminer un état du sous-système à partir du signal de communication des données par étalement du spectre reçu.

3. Système de communication (1300, 1400) selon la revendication 2 ;
dans lequel le bus de puissance (30) comprend :
une première pluralité de conducteurs (910), situés dans la remorque (20) ;
une deuxième pluralité de conducteurs (915), situés dans le tracteur (10) ; et
un connecteur (920) qui connecte électriquement la première pluralité de conducteurs (910) et la deuxième pluralité de conducteurs (915) ; et
dans lequel ledit moyen de production de signaux à spectre étalé (1340, 1430) est connecté électriquement à un conducteur de ladite première pluralité de conducteurs (910) ; et
dans lequel ledit moyen de réception de signaux à spectre étalé (1341, 1420) est connecté électriquement à un conducteur de ladite deuxième pluralité de conducteurs (915).

4. Système de communication (1300, 1400) selon la revendication 3, dans lequel ledit connecteur (920) comprend un connecteur à sept broches SAE J560.

5. Système de communication (1300, 1400) selon la revendication 1, comprenant par ailleurs :
un deuxième moyen de production de signaux à spectre étalé (1320), situé sur le tracteur (10) et couplé électriquement au bus de puissance (30), pour produire un deuxième signal de communication de données par étalement du spectre ; et
un deuxième moyen de réception des signaux à spectre étalé (1350), situé sur la remorque (20) et sensible au bus de puissance (30), pour recevoir ledit deuxième signal de communication de données par étalement du spectre.

6. Système de communication (1300, 1400) selon la revendication 1, comprenant en outre :
un indicateur avertisseur (1000) qui indique l'état d'un système de freinage antibloqueur (100) sur la remorque (20), ledit indicateur avertisseur (1000) étant sensible à un signal d'état produit par le système de freinage antibloqueur (100) ; et
un bloc indicateur avertisseur de remorque (1100), ledit moyen de production de signaux à spectre étalé (1340, 1430) et ledit indicateur avertisseur (1000) étant intégrés dans ledit bloc indicateur avertisseur de remorque (1100), ledit bloc indicateur avertisseur de remorque (1100) comprenant aussi un moyen pour monter ledit bloc indicateur avertisseur de remorque (1100) sur la remorque (20) de telle sorte que ledit indicateur avertisseur (1000) soit visible par un opérateur (1020) du tracteur / de la remorque placé à l'intérieur de la cabine du tracteur (1010).

7. Système de communication (1300, 1400) selon la revendication 1, dans lequel ledit moyen de détermination de l'état (330, 1410) comprend :
un indicateur (950) qui indique un état du sous-système à un opérateur (1020) placé dans le tracteur (10).

8. Système de communication (1300, 1400) selon la revendication 7, dans lequel le tracteur (10) inclut une cabine (1010) dotée d'un tableau de bord (970) situé à l'intérieur, et dans lequel ledit indicateur (950) comprend un affichage monté sur ledit tableau de bord.

9. Système de communication (1300, 1400) selon la revendication 7, dans lequel ledit indicateur (950) comprend au moins un, au choix, affichage alphanumérique (1612), affichage à DEL (1616) et annonciateur audio.

10. Système de communication (1300, 1400) selon la revendication 1, comprenant également un boîtier de module de communication de tracteur (1615), monté sur ledit tracteur (10), qui abrite ledit moyen de détermination de l'état (330, 1410).

11. Système de communication (1300, 1500) pour la connexion à la combinaison d'un tracteur (10) et d'une remorque (20) mécaniquement et électriquement connectée au tracteur (10), afin de communiquer une commande du tracteur (10) à un sous-système situé sur la remorque (20), ledit système comprenant :
un bus de puissance (30) qui alimente la combinaison du tracteur (10) et de la remorque (20) en énergie électrique ;
un moyen de communication par courants porteurs sur ligne à haute tension (320), situé sur le tracteur (10), pour produire un signal de communication de données sur ledit bus de puissance (30) ; et
un moyen de commande (1520), situé sur la remorque (20) et en communication électrique avec ledit bus de puissance (30), pour commander le sous-système ;
**caractérisé en ce que** ledit moyen de communication par courants porteurs sur ligne à haute tension (320) comprend un moyen de production de signaux à spectre étalé (1320, 1510) pour produire un signal de communication de données par étalement du spectre représentant la commande, dans lequel ledit moyen de production de signaux à spectre étalé (1320, 1510) est en communication électrique avec ledit bus de puissance (30) et produit un signal de communication de données par étalement du spectre représentant la commande sur ledit bus de puissance (30), et dans lequel ledit moyen de commande (1520) commande le sous-système sur la base du signal de communication de données par étalement du spectre.

12. Système de communication (1300, 1500) selon la revendication 11,
dans lequel ledit moyen de production de signaux à spectre étalé (1320, 1510) comprend un moyen pour produire ledit signal de communication de données par étalement du spectre à partir de la commande ; et
dans lequel ledit moyen de commande (1520) comprend :
un moyen de réception des signaux à spectre étalé (1350, 1522), situé sur la remorque (20) et sensible au dit bus de puissance (30), pour recevoir ledit signal de communication de données par étalement du spectre ; et
un moyen pour commander le sous-système à partir du signal reçu de communication de données par étalement du spectre reçu.

13. Système de communication (1300, 1500) selon la revendication 12 :
dans lequel le bus de puissance (30) comprend :
une première pluralité de conducteurs (910), situés dans la remorque (20) ;
une deuxième pluralité de conducteurs (915), situés dans le tracteur (10) ; et
un connecteur (920) qui connecte électriquement la première pluralité de conducteurs (910) et la deuxième pluralité de conducteurs (915) ; et
dans lequel ledit moyen de production de signaux à spectre étalé (1320, 1510) est connecté électriquement à un conducteur de ladite deuxième pluralité de conducteurs (915) ; et
dans lequel ledit moyen de réception des signaux à spectre étalé (1350, 1522)est connecté électriquement à un conducteur de ladite première pluralité de conducteurs (910).

14. Système de communication (1300, 1500) selon la revendication 13, dans lequel ledit connecteur (920) comprend un connecteur à sept broches SAE J560.

15. Système de communication (1300, 1500) selon la revendication 11, comprenant par ailleurs :
un deuxième moyen de production de signaux à spectre étalé (1340), situé sur la remorque (20), couplé électriquement au bus de puissance (30) et sensible à un premier sous-système prévu sur la remorque, pour produire un signal de communication de données par étalement du spectre à partir d'un signal d'état fourni par le premier sous-système ; et
un deuxième moyen de réception des signaux à spectre étalé (1341) situé sur le tracteur (10) et sensible au bus de puissance (30), pour recevoir ledit premier signal de communication de données par étalement du spectre.

16. Système de communication (1300, 1500) selon à la revendication 11, comprenant par ailleurs un moyen d'entrée d'opérateur pour recevoir une commande d'un opérateur (1020) placé sur le tracteur (10), et dans lequel ledit moyen de production de signaux à spectre étalé (1320, 1510) comprend un moyen pour produire un signal de communication de données par étalement du spectre représentant la commande transmise.

17. Système de communication (1300, 1500) selon la revendication 16, dans lequel le tracteur (10) inclut une cabine (1010) dotée d'un tableau de bord (970) situé à l'intérieur, et dans lequel ledit moyen d'entrée d'opérateur comprend un commutateur (1614) monté sur ledit tableau de bord (970).

18. Système de communication (1300, 1500) selon la revendication 11, comprenant aussi un moyen d'entrée d'opérateur pour recevoir une commande d'un opérateur placé sur le tracteur (10), et dans lequel ledit moyen de production de signaux à spectre étalé (1320, 1510) comprend un moyen pour produire un signal de communication de données par étalement du spectre représentant la commande reçue.

19. Système de communication (1300, 1500) selon la revendication 11, comprenant en outre :
un boîtier de module de communication de tracteur (1650), monté sur ledit tracteur (10), qui abrite ledit moyen de production de signaux à spectre étalé (1320, 1510).

20. Module de communication (1630) pour la connexion à une remorque (20) ayant un bus de puissance (30) pour recevoir la puissance d'un tracteur (10) connecté mécaniquement et électriquement à la remorque (20), le module (1630) comprenant :
une entrée de signal d'état (1651) ;
une sortie de signal de commande (1652) ; et
un moyen de communication par courants porteurs sur ligne à haute tension (320) sensible à ladite entrée de signal d'état (1651), pour produire un signal de communication de données sur ledit bus de puissance (30) ;
**caractérisé en ce que** ledit moyen de communication par courants porteurs sur ligne à haute tension comprend un moyen de production de signaux à spectre étalé (1340, 1430) pour produire un signal de communication de données par étalement du spectre à partir d'un signal d'état fourni au niveau de ladite entrée de signal d'état (1651),
dans lequel ledit module comprend également un moyen pour coupler ledit moyen de production de signaux à spectre étalé (1340, 1430) au bus de puissance (30) de manière à ce qu'un signal de communication de données par étalement du spectre produit par ledit moyen de production de signaux à spectre étalé (1340, 1430) soit superposé sur le bus de puissance (30),
dans lequel ledit moyen de communication par courants porteurs sur ligne à haute tension comprend par ailleurs un moyen de réception des signaux à spectre étalé (1350, 1522) pour recevoir un signal de communication de données par étalement du spectre et pour produire un signal de commande au niveau de ladite sortie de signal de commande (1652) à partir du signal de communication de données par étalement du spectre reçu,
et dans lequel ledit module comprend encore un moyen pour coupler électriquement ledit moyen de réception des signaux à spectre étalé (1350, 1522) au bus de puissance (30) de manière à ce qu'un signal de communication de données par étalement du spectre superposé sur le bus de puissance (30) soit reçu par ledit moyen de réception des signaux à spectre étalé (1350, 1522).

21. Module de communication (1630) selon la revendication 20, comprenant de plus :
un boîtier de module de communication (1635) qui abrite ledit moyen de réception des signaux à spectre étalé (1350, 1522) et ledit moyen de production de signaux à spectre étalé (1340, 1430) ; et
un moyen (1632) pour monter ledit boîtier de module de communication (1635) sur une remorque (20).

22. Module de communication (1610) pour la connexion à un tracteur (10) ayant un bus de puissance (30) qui alimente le tracteur (10) en énergie électrique, le module de communication (1610) comprenant :
une entrée de commande ; et
un moyen de communication par courants porteurs sur ligne à haute tension, sensible à ladite entrée de commande, pour produire un signal de communication de données sur ledit bus de puissance (30) ;
**caractérisé en ce que** ledit moyen de communication par courants porteurs sur ligne à haute tension comprend un moyen de production de signaux à spectre étalé (1320, 1510) pour produire un signal de communication de données par étalement du spectre à partir d'une commande fournie au niveau de ladite entrée de commande,
dans lequel ledit module (1610) comprend en outre un moyen pour coupler ledit moyen de production de signaux à spectre étalé (1320, 1510) au bus de puissance (30) de manière à ce qu'un signal de communication de données par étalement du spectre produit par ledit moyen de production de signaux à spectre étalé (1320, 1510) soit superposé sur le bus de puissance (30),
dans lequel ledit moyen de communication par courants porteurs sur ligne à haute tension comprend par ailleurs un moyen de réception des signaux à spectre étalé (1341, 1420) pour recevoir un signal de communication de données par étalement du spectre,
et dans lequel ledit module (1610) comprend encore un moyen pour coupler électriquement ledit moyen de réception des signaux à spectre étalé (1341, 1420) au bus de puissance (30) de manière à ce qu'un signal de communication de données par étalement du spectre superposé sur le bus de puissance (30) soit reçu par ledit moyen de réception des signaux à spectre étalé (1341, 1420).

23. Module de communication (1610) selon la revendication 22, comprenant en outre :
un boîtier de module de communication (1615) qui abrite ledit moyen de production de signaux à spectre étalé (1320, 1510) et ledit moyen de réception des signaux à spectre étalé (1341, 1420) ; et
un moyen (1518) pour monter ledit boîtier de module de communication (1615) sur un tracteur (10).

24. Module de communication (1610) selon la revendication 22, dans lequel le signal de communication de données par étalement du spectre superposé sur le bus de puissance (30) représente un état d'un sous-système, et comprenant de plus un moyen de détermination de l'état (1410), sensible audit moyen de réception des signaux à spectre étalé (1341, 1420), pour déterminer un état du sous-système à partir du signal reçu de communication de données par étalement du spectre reçu.

25. Module de communication (1610) selon la revendication 24, dans lequel ledit moyen de détermination de l'état (1410) comprend :
un indicateur (950) qui indique un état du sous-système ; et
un moyen pour monter ledit indicateur (950) sur le tracteur (10) de manière à ce que l'indicateur (950) soit visible par un opérateur (1010) placé dans le tracteur (10).

26. Module de communication (1610) selon la revendication 25, comprenant en outre :
un boîtier de module de communication (1615) qui abrite ledit moyen de production de signaux à spectre étalé (1340, 1430), ledit moyen de réception de signaux à spectre étalé (1350, 1522) et ledit indicateur (950) ; et
un moyen (1518) pour monter ledit boîtier de module de communication (1615) sur le tracteur (10) de manière à ce que ledit indicateur (950) soit visible par un opérateur (1010) placé sur le tracteur (10).

27. Module de communication (1610) selon la revendication 22, dans lequel ladite entrée de commande comprend :
un moyen d'entrée d'opérateur pour recevoir une commande d'un opérateur (1010).

28. Module de communication (1610) selon la revendication 27, comprenant en outre:
un boîtier de module de communication (1615) qui abrite ledit moyen de production de signaux à spectre étalé (1340, 1430) et ledit moyen d'entrée d'opérateur ; et
un moyen (1518) pour monter ledit module de communication (1610) sur le tracteur (10) de manière à ce qu'un opérateur (1010) placé sur le tracteur (10) puisse accéder au dit moyen d'entrée d'opérateur.

29. Procédé de surveillance d'un système situé sur une remorque (20) qui produit un signal de données représentant un état du système et un bus de puissance (30) qui distribue de l'énergie électrique à la remorque (20) et un tracteur (10) connecté à celle-ci, ledit procédé comprenant les étapes consistant à :
produire un signal de communication de données à partir du signal de données ;
moduler le signal de communication de données ;
communiquer ledit signal de communication de données sur le bus de données ; et
déterminer l'état du système à partir du signal de communication de données communiqué ;
**caractérisé en ce que** ladite étape de modulation comprend la modulation du signal de communication de données pour produire un signal de communication de données par étalement du spectre,
dans lequel ladite étape de communication comprend la superposition du signal de communication de données par étalement du spectre sur le bus de puissance (30), au niveau de la remorque (20),
et dans lequel ladite étape de détermination comprend les étapes consistant à :
recevoir le signal de communication de données par étalement du spectre superposé ; et
déterminer l'état du système à partir du signal de communication de données par étalement du spectre reçu.

30. Procédé selon la revendication 29, dans lequel ladite étape de détermination comprend l'étape consistant à :
indiquer un état du système à un opérateur (1010) placé sur le tracteur (10).

31. Procédé de communication d'une commande d'un tracteur (10) à un système situé sur une remorque (20) électriquement et mécaniquement connectée au tracteur (10), la combinaison du tracteur (10) et de la remorque (20) incluant un bus de puissance (30) qui alimente le tracteur (10) et la remorque (20) en énergie électrique, ledit procédé comprenant les étapes consistant à :
moduler un signal de communication de données représentant la commande ;
recevoir le signal de communication au niveau de la remorque (20) ; et
commander le système sur la base du signal de communication ;
**caractérisé en ce que** ladite étape de modulation comprend les étapes consistant à :
moduler le signal de communication de données pour produire un signal de communication de données par étalement du spectre représentant la commande ; et
superposer le signal de communication de données par étalement du spectre sur le bus de puissance (30), au niveau du tracteur (10),
dans lequel ladite étape de réception comprend la réception du signal de communication de données par étalement du spectre superposé à partir du bus de puissance, au niveau de la remorque (20),
et dans lequel ladite étape de commande comprend la commande du système sur la base du signal de communication de données par étalement du spectre.

32. Procédé selon la revendication 31, dans lequel ladite étape de communication est précédée par l'étape de réception d'une commande d'un opérateur (1010) placé sur le tracteur (100).

33. Procédé selon la revendication 31, dans lequel ladite étape de commande du système comprend l'étape consistant à :
produire un signal de commande à partir du signal de communication de données par étalement du spectre.
